(19) Europäisches Patentamt
European Patent Office
Office européen des brevets

(11) EP 4 797 770 A1

(12) **EUROPEAN PATENT APPLICATION**
published in accordance with Art. 153(4) EPC

(43) Date of publication:
**26.08.2026 Bulletin 2026/35**

(21) Application number: **24884155.3**

(22) Date of filing: **20.08.2024**

(51) International Patent Classification (IPC):
***H04W 24/02*** *(2009.01)*

(52) Cooperative Patent Classification (CPC):
**H04W 24/02; H04W 28/06; H04W 76/12**

(86) International application number:
**PCT/CN2024/113316**

(87) International publication number:
**WO 2025/092148 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311458433**

(71) Applicant: **HUAWEI TECHNOLOGIES CO., LTD.**
**Shenzhen 518129 (CN)**

(72) Inventors:
- **XU, Rui**
  **Shenzhen, Guangdong 518129 (CN)**
- **QIN, Yi**
  **Shenzhen, Guangdong 518129 (CN)**
- **CAO, Youlong**
  **Shenzhen, Guangdong 518129 (CN)**
- **PANG, Xu**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

## (54) DATA TRANSMISSION METHOD AND COMMUNICATION APPARATUS

(57) This application provides a data transmission method and a communication apparatus. The method includes: obtaining first semantic similarity information from a core network element, where the first semantic similarity information indicates a similarity between decoded information corresponding to different sub-data packets in a first data packet and first original information, and the first data packet includes a data packet obtained by encoding the first original information; and outputting a second data packet to a user equipment based on the first semantic similarity information, where data of the second data packet is a part of data of the first data packet. In this way, in semantic communication for different tasks and objects, transmission efficiency of a large volume of data can be improved.

Server or data network
Core network element
Access network device
Terminal device
S530: Encode first original information to obtain a third data packet
S540: First semantic similarity information
S510: First semantic similarity information
S520: Based on the first semantic similarity information
Second data packet

FIG. 5



Processed by Luminess, 75001 PARIS (FR)

## Description

This application claims priority to Chinese Patent Application No. 202311458433.7, filed with the China National Intellectual Property Administration on November 2, 2023 and entitled "DATA TRANSMISSION METHOD AND COMMUNICATION APPARATUS", which is incorporated herein by reference in its entirety.

## TECHNICAL FIELD

This application relates to the communication field, and more specifically, to a data transmission method and a communication apparatus.

## BACKGROUND

Semantic communication is a technology that uses semantics to represent information and in which the semantics is transmitted. Different from the conventional communication industry, the semantic communication requires that each bit be correctly transmitted and each pixel of a transmitted image frame be not distorted. The semantic communication is more about semantic transmission. To be specific, meaning expression and transmission of information are resolved at a semantic level, and an understanding phase of an information meaning is partially or entirely placed to a transmit end.

In a semantic communication service, different tasks and different scenarios have different quality requirements on large data volume transmission. Therefore, if a parameter of a current 5th generation mobile communication technology (5th generation mobile network, 5G) quality of service (quality of service, QoS) identifier (identifier) is still used, in other words, if a parameter (for example, a packet delay budget (packet delay budget, PDB) or a packet error rate (packet error rate, PER)) of a 5QI is still used, to ensure feature flow-based large data volume transmission, low efficiency is caused.

Therefore, in semantic communication for different tasks and objects, how to improve transmission efficiency of a large volume of data is an urgent problem to be resolved.

## SUMMARY

This application provides a data transmission method and a communication apparatus, to improve transmission efficiency of a large volume of data in semantic communication for different tasks and objects.

According to a first aspect, a data transmission method is provided. The method may be performed by an access network device, may be performed by a module (for example, a chip) in the access network device, or may be implemented by a logical node, a logical module, or software that can implement all or some functions of the access network device. The method includes: obtaining first semantic similarity information from a core network element, where the first semantic similarity information indicates a similarity between decoded information corresponding to different sub-data packets in a first data packet and first original information, and the first data packet includes a data packet obtained by encoding the first original information; and outputting a second data packet to a terminal device based on the first semantic similarity information, where data of the second data packet is a part of data of the first data packet.

In the foregoing technical solution, the access network device may obtain the optimized second data packet based on the first semantic similarity information, so that data pressure on an air interface side can be reduced, thereby improving transmission efficiency and user experience in semantic communication. For example, for a license plate recognition task, an objective of transmitting data by the access network device to the terminal device is not to restore an image with very high definition. The access network device can reduce a volume of data transmitted on the air interface side via the first semantic similarity information, so that transmission efficiency in the semantic communication is improved.

With reference to the first aspect, in some implementations of the first aspect, the first semantic similarity information indicates a first semantic similarity and a first sub-data packet corresponding to the first semantic similarity, and the first data packet includes the first sub-data packet.

In this way, the access network device can intuitively obtain the first semantic similarity, so that the access network device can quickly optimize the data packet.

With reference to the first aspect, in some implementations of the first aspect, the first semantic similarity information indicates a quantity of second sub-data packets and a second semantic similarity corresponding to the quantity of the second sub-data packets, and the first data packet includes the second sub-data packet.

In this way, the access network device may indirectly obtain the second semantic similarity based on the quantity of the second sub-data packets, to help the access network device optimize the data packet.

With reference to the first aspect, in some implementations of the first aspect, the first semantic similarity information is carried in the first data packet.

In this way, the first semantic similarity information is transmitted with the data packet, so that the access network device can quickly adapt to a change of an application layer.

With reference to the first aspect, in some implementations of the first aspect, the first semantic similarity information is carried in a general packet radio service tunneling protocol-user plane GTP-U, and the GTP-U is carried in the first data packet.

In this way, a current protocol format may still be used, so that compatibility of a protocol frame is improved.

According to a second aspect, a data transmission method is provided. The method is applied to a server, may be performed by a module (for example, a chip) in the server (or a data network), or may be implemented by a logical node, a logical module, or software that can implement all or some functions of the server (or the data network). The method includes: encoding first original information to obtain a third data packet; and outputting first semantic similarity information to a core network element, where the first semantic similarity information indicates a similarity between decoded information corresponding to different sub-data packets in the third data packet and the first original information.

In the foregoing technical solution, the server outputs the first semantic similarity information to the core network element. This can help the access network device subsequently obtain an optimized second data packet based on the first semantic similarity information, so that data pressure on an air interface side can be reduced, thereby improving transmission efficiency and user experience in semantic communication.

With reference to the second aspect, in some implementations of the second aspect, the first semantic similarity information indicates a first semantic similarity and a first sub-data packet corresponding to the first semantic similarity, and the third data packet includes the first sub-data packet.

In this way, the first semantic similarity information directly indicates the first semantic similarity, so that the access network device can quickly optimize the data packet.

With reference to the second aspect, in some implementations of the second aspect, the semantic similarity information indicates a quantity of second sub-data packets and a second semantic similarity corresponding to the quantity of the second sub-data packets, and the third data packet includes the second sub-data packet.

In this way, the first semantic similarity information directly indicates the quantity of the second sub-data packets. This helps the access network device indirectly obtain the second semantic similarity, and further helps the access network device optimize the data packet.

With reference to the second aspect, in some implementations of the second aspect, the first semantic similarity information is carried in the third data packet.

In this way, the first semantic similarity information is transmitted with the data packet, so that the access network device can quickly adapt to a change of an application layer.

With reference to the second aspect, in some implementations of the second aspect, the first semantic similarity information is carried in a real-time transport protocol RTP, and the RTP is carried in the third data packet.

In this way, a current protocol format may still be used, so that compatibility of a protocol frame is improved.

According to a third aspect, a data transmission method is provided. The method is applied to a core network element, may be performed by a module (for example, a chip) in the core network element, or may be implemented by a logical node, a logical module, or software that can implement all or some functions of the core network element. The method includes: obtaining first semantic similarity information from a server, where the first semantic similarity information indicates a similarity between decoded information corresponding to different sub-data packets in a third data packet and first original information, and the third data packet includes a data packet obtained by encoding the first original information; and outputting the first semantic similarity information to an access network device.

In the foregoing technical solution, the core network element outputs the first semantic similarity information to the access network device. This can help the access network device subsequently obtain an optimized second data packet based on the first semantic similarity information, so that data pressure on an air interface side can be reduced, thereby improving transmission efficiency and user experience in semantic communication.

With reference to the third aspect, in some implementations of the third aspect, the first semantic similarity information indicates a first semantic similarity and a first sub-data packet corresponding to the first semantic similarity, and the third data packet includes the first sub-data packet.

In this way, the first semantic similarity information directly indicates the first semantic similarity, so that the access network device can quickly optimize the data packet.

With reference to the third aspect, in some implementations of the third aspect, the first semantic similarity information indicates a quantity of second sub-data packets and a second semantic similarity corresponding to the quantity of the second sub-data packets, and the third data packet includes the second sub-data packet.

In this way, the first semantic similarity information directly indicates the quantity of the second sub-data packets. This helps the access network device indirectly obtain the second semantic similarity, and further helps the access network device optimize the data packet.

With reference to the third aspect, in some implementations of the third aspect, the first semantic similarity information from the server is carried in the third data packet, the first semantic similarity information output to the access

network device is carried in a first data packet, and the first data packet includes a data packet obtained by encoding the first original information.

In this way, the first semantic similarity information is transmitted with the data packet, so that the access network device can quickly adapt to a change of an application layer.

With reference to the third aspect, in some implementations of the third aspect, the first semantic similarity information from the server is carried in an RTP, and the RTP is carried in the third data packet; and the first semantic similarity information output to the access network device is carried in a GTP-U, and the GTP-U is carried in the first data packet.

In this way, a current protocol format may still be used, so that compatibility of a protocol frame is improved.

According to a fourth aspect, a data transmission method is provided. The method is applied to an access network device, may be performed by a module (for example, a chip) in the access network device, or may be implemented by a logical node, a logical module, or software that can implement all or some functions of the access network device. The method includes: obtaining semantic similarity demand information, where the semantic similarity demand information indicates a lower limit condition that is related to a semantic similarity and that needs to be met in a data transmission process, the semantic similarity is a similarity between decoded information corresponding to different sub-data packets in a fourth data packet and second original information, and the fourth data packet includes a data packet obtained by encoding the second original information; and outputting a fifth data packet based on the semantic similarity demand information, where data of the fifth data packet is a part of data of the fourth data packet.

In the foregoing technical solution, the access network device obtains the optimized fifth data packet via the semantic similarity demand information, so that data pressure on an air interface side can be reduced, thereby improving transmission efficiency and user experience in semantic communication. In addition, the semantic similarity demand information is related only to a task, which has a low update frequency and low signaling overheads. For example, a second task may be a license plate recognition task. In the task, a number in an image only needs to be clearly recognized, and whether all pixels of the image can be restored is not focused on. Therefore, a data volume corresponding to the lower limit condition that is indicated by the semantic similarity demand information and that is determined by a server based on the license plate recognition task is far less than that in common image transmission. For another example, when an implementation object of a second task is a machine, the machine focuses only on a part of interest in an image, and does not have an excessive requirement on a restoration degree of the entire image. Therefore, a data volume corresponding to the lower limit condition that is indicated by the semantic similarity demand information and that is determined by a server based on the implementation object being the machine is far less than that in common image transmission.

With reference to the fourth aspect, in some implementations of the fourth aspect, the method further includes: obtaining quality of service QoS reliability information, where there is a mapping relationship between the QoS reliability information and semantic similarity demand information; and obtaining the semantic similarity demand information includes: obtaining the semantic similarity demand information based on the QoS reliability information and the mapping relationship.

In the foregoing technical solution, the access network device may obtain the semantic similarity demand information via the existing QoS reliability information and the mapping relationship between the QoS reliability information and the semantic similarity demand information. The data packet is optimized by using the existing parameter, so that data pressure on an air interface side can be reduced, thereby improving transmission efficiency and user experience in semantic communication, and also reducing modifications to an existing QoS flow configuration, and improving compatibility of the existing QoS flow configuration.

With reference to the fourth aspect, in some implementations of the fourth aspect, the semantic similarity demand information indicates a data volume lower limit in the data transmission process, or the semantic similarity demand information indicates a semantic similarity lower limit.

With reference to the fourth aspect, in some implementations of the fourth aspect, the semantic similarity demand information is carried in a quality of service QoS profile.

In this way, the current QoS profile may still be used, so that compatibility of the QoS profile is improved.

According to a fifth aspect, a data transmission method is provided. The method is applied to a server, may be performed by a module (for example, a chip) in the server (or a data network), or may be implemented by a logical node, a logical module, or software that can implement all or some functions of the server (or the data network). The method includes: encoding second original information to obtain a sixth data packet; and outputting semantic similarity demand information, where the semantic similarity demand information indicates a lower limit condition that is related to a semantic similarity and that needs to be met in a data transmission process, and the semantic similarity is a similarity between decoded information corresponding to different sub-data packets in the sixth data packet and the second original information.

In the foregoing technical solution, the semantic similarity information output by the server helps an access network device subsequently obtain an optimized fifth data packet via the semantic similarity demand information, so that data pressure on an air interface side can be reduced, thereby improving transmission efficiency and user experience in

semantic communication. In addition, the semantic similarity demand information is related only to a task, which has a low update frequency and low signaling overheads.

With reference to the fifth aspect, in some implementations of the fifth aspect, the semantic similarity demand information indicates a semantic similarity lower limit. Alternatively, the semantic similarity demand information indicates a data volume lower limit in the data transmission process.

According to a sixth aspect, a data transmission method is provided. The method is applied to a core network element, may be performed by a module (for example, a chip) in the core network element, or may be implemented by a logical node, a logical module, or software that can implement all or some functions of the core network element. The method includes: obtaining semantic similarity demand information from a server, where the semantic similarity demand information indicates a lower limit condition that is related to a semantic similarity and that needs to be met in a data transmission process, the semantic similarity is a similarity between decoded information corresponding to different sub-data packets in a sixth data packet and second original information, and the sixth data packet includes a data packet obtained by encoding the second original information; and outputting the semantic similarity demand information.

In the foregoing technical solution, the semantic similarity information output by the core network element helps an access network device subsequently obtain an optimized fifth data packet via the semantic similarity demand information, so that data pressure on an air interface side can be reduced, thereby improving transmission efficiency and user experience in semantic communication. In addition, the semantic similarity demand information is related only to a task, which has a low update frequency and low signaling overheads.

With reference to the sixth aspect, in some implementations of the sixth aspect, the semantic similarity demand information indicates a semantic similarity lower limit. Alternatively, the semantic similarity demand information indicates a data volume lower limit in the data transmission process.

With reference to the sixth aspect, in some implementations of the sixth aspect, outputting the semantic similarity demand information includes: outputting the semantic similarity demand information to the core network element, where the semantic similarity demand information is carried in a packet detection rule.

In this way, the current packet detection rule may still be used, so that compatibility of the packet detection rule is improved.

With reference to the sixth aspect, in some implementations of the sixth aspect, outputting the semantic similarity demand information includes: outputting the semantic similarity demand information to an access network device, where the semantic similarity demand information is carried in a QoS profile.

In this way, the current QoS profile may still be used, so that compatibility of the QoS profile is improved.

With reference to the sixth aspect, in some implementations of the sixth aspect, outputting the semantic similarity demand information includes: sending the semantic similarity demand information to a terminal device, where the semantic similarity demand information is carried in a QoS rule.

In this way, the current QoS rule may still be used, so that compatibility of the QoS rule is improved.

According to a seventh aspect, a communication apparatus is provided. The apparatus may be an access network device, may be a module (for example, a chip) in the access network device, or may be a logical node, a logical module, or software that implements all or some functions of the access network device. The apparatus includes an interface unit and a processing unit. The interface unit is configured to obtain first semantic similarity information from a core network element, where the first semantic similarity information indicates a similarity between decoded information corresponding to different sub-data packets in a first data packet and first original information, and the first data packet includes a data packet obtained by encoding the first original information. The processing unit is configured to output a second data packet to a terminal device based on the first semantic similarity information, where data of the second data packet is a part of data of the first data packet.

It should be understood that the seventh aspect corresponds to the first aspect. For effects achieved by the technical solution of the seventh aspect, refer to the first aspect. This is not described in detail.

With reference to the seventh aspect, in some implementations of the seventh aspect, the first semantic similarity information indicates a first semantic similarity and a first sub-data packet corresponding to the first semantic similarity, and the first data packet includes the first sub-data packet.

With reference to the seventh aspect, in some implementations of the seventh aspect, the first semantic similarity information indicates a quantity of second sub-data packets and a second semantic similarity corresponding to the quantity of the second sub-data packets, and the first data packet includes the second sub-data packet.

With reference to the seventh aspect, in some implementations of the seventh aspect, the first semantic similarity information is carried in the first data packet.

With reference to the seventh aspect, in some implementations of the seventh aspect, the first semantic similarity information is carried in a general packet radio service tunneling protocol-user plane GTP-U, and the GTP-U is carried in the first data packet.

According to an eighth aspect, a communication apparatus is provided. The apparatus may be a server (or a data network), may be a module (for example, a chip) in the server (or the data network), or may be a logical node, a logical

module, or software that can implement all or some functions of the server (or the data network). The apparatus includes an interface unit and a processing unit. The processing unit is configured to encode first original information to obtain a third data packet. The interface unit is configured to output first semantic similarity information to a core network element, where the first semantic similarity information indicates a similarity between decoded information corresponding to different sub-data packets in the third data packet and the first original information.

It should be understood that the eighth aspect corresponds to the second aspect. For effects achieved by the technical solution of the eighth aspect, refer to the second aspect. This is not described in detail.

With reference to the eighth aspect, in some implementations of the eighth aspect, the first semantic similarity information includes a first semantic similarity and a first sub-data packet corresponding to the first semantic similarity, and the third data packet includes the first sub-data packet.

With reference to the eighth aspect, in some implementations of the eighth aspect, the semantic similarity information indicates a quantity of second sub-data packets and a second semantic similarity corresponding to the quantity of the second sub-data packets, and the third data packet includes the second sub-data packet.

With reference to the eighth aspect, in some implementations of the eighth aspect, the first semantic similarity information is carried in the third data packet.

With reference to the eighth aspect, in some implementations of the eighth aspect, the first semantic similarity information is carried in a real-time transport protocol RTP, and the RTP is carried in the third data packet.

According to a ninth aspect, a communication apparatus is provided. The apparatus may be a core network element, may be a module (for example, a chip) in the core network element, or may be a logical node, a logical module, or software that can implement all or some functions of the core network element. The apparatus includes an interface unit. The interface unit is configured to obtain first semantic similarity information from a server, where the first semantic similarity information indicates a similarity between decoded information corresponding to different sub-data packets in a third data packet and first original information, and the third data packet includes a data packet obtained by encoding the first original information. The interface unit is further configured to output the first semantic similarity information to an access network device.

It should be understood that the ninth aspect corresponds to the third aspect. For effects achieved by the technical solution of the ninth aspect, refer to the third aspect. This is not described in detail.

With reference to the ninth aspect, in some implementations of the ninth aspect, the first semantic similarity information indicates a first semantic similarity and a first sub-data packet corresponding to the first semantic similarity, and the third data packet includes the first sub-data packet.

With reference to the ninth aspect, in some implementations of the ninth aspect, the first semantic similarity information indicates a quantity of second sub-data packets and a second semantic similarity corresponding to the quantity of the second sub-data packets, and the third data packet includes the second sub-data packet.

With reference to the ninth aspect, in some implementations of the ninth aspect, the first semantic similarity information from the server is carried in the third data packet, the first semantic similarity information output to the access network device is carried in a first data packet, and the first data packet includes a data packet obtained by encoding the first original information.

With reference to the ninth aspect, in some implementations of the ninth aspect, the first semantic similarity information from the server is carried in an RTP, and the RTP is carried in the third data packet; and the first semantic similarity information output to the access network device is carried in a GTP-U, and the GTP-U is carried in the first data packet.

According to a tenth aspect, a communication apparatus is provided. The apparatus may be an access network device, may be a module (for example, a chip) in the access network device, or may be a logical node, a logical module, or software that implements all or some functions of the access network device. The apparatus includes an interface unit and a processing unit. The interface unit is configured to obtain semantic similarity demand information, where the semantic similarity demand information indicates a lower limit condition that is related to a semantic similarity and that needs to be met in a data transmission process, the semantic similarity is a similarity between decoded information corresponding to different sub-data packets in a fourth data packet and second original information, and the fourth data packet includes a data packet obtained by encoding the second original information. The processing unit is configured to output a fifth data packet based on the semantic similarity demand information, where data of the fifth data packet is a part of data of the fourth data packet.

It should be understood that the tenth aspect corresponds to the fourth aspect. For effects achieved by the technical solution of the tenth aspect, refer to the fourth aspect. This is not described in detail.

With reference to the tenth aspect, in some implementations of the tenth aspect, the interface unit is further configured to obtain quality of service QoS reliability information, where there is a mapping relationship between the QoS reliability information and semantic similarity demand information. The processing unit is specifically configured to obtain the semantic similarity demand information based on the QoS reliability information and the mapping relationship.

With reference to the tenth aspect, in some implementations of the tenth aspect, the semantic similarity demand

information indicates a data volume lower limit in the data transmission process, or the semantic similarity demand information indicates a semantic similarity lower limit.

With reference to the tenth aspect, in some implementations of the tenth aspect, the semantic similarity demand information is carried in a quality of service QoS profile.

According to an eleventh aspect, a communication apparatus is provided. The apparatus may be a server (or a data network), may be a module (for example, a chip) in the server (or the data network), or may be a logical node, a logical module, or software that can implement all or some functions of the server (or the data network). The apparatus includes a processing unit and an interface unit. The processing unit is configured to encode second original information to obtain a sixth data packet. The interface unit is configured to output semantic similarity demand information, where the semantic similarity demand information indicates a lower limit condition that is related to a semantic similarity and that needs to be met in a data transmission process, and the semantic similarity is a similarity between decoded information corresponding to different sub-data packets in the sixth data packet and the second original information.

It should be understood that the eleventh aspect corresponds to the fifth aspect. For effects achieved by the technical solution of the eleventh aspect, refer to the fifth aspect. This is not described in detail.

With reference to the eleventh aspect, in some implementations of the eleventh aspect, the semantic similarity demand information indicates a semantic similarity lower limit. Alternatively, the semantic similarity demand information indicates a data volume lower limit in the data transmission process.

According to a twelfth aspect, a communication apparatus is provided. The apparatus may be a core network element, may be a module (for example, a chip) in the core network element, or may be a logical node, a logical module, or software that can implement all or some functions of the core network element. The apparatus includes an interface unit. The interface unit is configured to obtain semantic similarity demand information from a server, where the semantic similarity demand information indicates a lower limit condition that is related to a semantic similarity and that needs to be met in a data transmission process, the semantic similarity is a similarity between decoded information corresponding to different sub-data packets in a sixth data packet and second original information, and the sixth data packet includes a data packet obtained by encoding the second original information. The interface unit is configured to output the semantic similarity demand information.

It should be understood that the twelfth aspect corresponds to the sixth aspect. For effects achieved by the technical solution of the twelfth aspect, refer to the sixth aspect. This is not described in detail.

With reference to the twelfth aspect, in some implementations of the twelfth aspect, the semantic similarity demand information indicates a semantic similarity lower limit. Alternatively, the semantic similarity demand information indicates a data volume lower limit in the data transmission process.

With reference to the twelfth aspect, in some implementations of the twelfth aspect, outputting the semantic similarity demand information includes: outputting the semantic similarity demand information to the core network element, where the semantic similarity demand information is carried in a packet detection rule.

With reference to the twelfth aspect, in some implementations of the twelfth aspect, outputting the semantic similarity demand information includes: outputting the semantic similarity demand information to an access network device, where the semantic similarity demand information is carried in a QoS profile.

With reference to the twelfth aspect, in some implementations of the twelfth aspect, outputting the semantic similarity demand information includes: sending the semantic similarity demand information to a terminal device, where the semantic similarity demand information is carried in a QoS rule.

According to a thirteenth aspect, a communication system is provided, including at least two of an access network device, a server, and a core network element. The access network device is configured to perform the method according to any one of the first aspect and the possible implementations of the first aspect, the server is configured to perform the method according to any one of the second aspect and the possible implementations of the second aspect, and the core network element is configured to perform the method according to any one of the third aspect and the possible implementations of the third aspect; or the access network device is configured to perform the method according to any one of the fourth aspect or the possible implementations of the fourth aspect, and the server is configured to perform the method according to any one of the fifth aspect or the possible implementations of the fifth aspect, the core network element is configured to perform the method according to any one of the sixth aspect and the possible implementations of the sixth aspect.

According to a fourteenth aspect, a computer-readable storage medium is provided. The computer-readable medium stores program code to be executed by a device, and the program code is used to perform the method provided in any one of the implementations of the first aspect to the sixth aspect.

According to a fifteenth aspect, a computer program product including instructions is provided. When the computer program product runs on a computer, the computer is caused to perform the method provided in any one of the implementations of the first aspect to the sixth aspect.

According to a sixteenth aspect, a chip is provided. The chip includes a processor and a communication interface. The processor reads, through the communication interface, instructions stored in a memory, to perform the method

provided in any one of the implementations of the first aspect to the sixth aspect.

Optionally, in an implementation, the chip may further include the memory. The memory stores a computer program or the instructions. The processor is configured to execute the computer program or the instructions stored in the memory. When the computer program or the instructions are executed, the processor is configured to perform the method according to any one of the implementations of the first aspect to the sixth aspect.

## BRIEF DESCRIPTION OF DRAWINGS

FIG. 1 to FIG. 3 each are a diagram of an architecture of a communication system according to an embodiment of this application;
FIG. 4 is a diagram of a 5G system based on a QoS architecture according to an embodiment of this application;
FIG. 5, FIG. 6, and FIG. 8 to FIG. 11 each are an interaction diagram of a data transmission method according to an embodiment of this application;
FIG. 7 is a diagram of a transmission procedure of a protocol stack according to an embodiment of this application;
FIG. 12 and FIG. 13 each are a diagram of a communication apparatus according to an embodiment of this application; and
FIG. 14 is a diagram of a chip system 1400 according to an embodiment of this application.

## DESCRIPTION OF EMBODIMENTS

The following describes technical solutions of this application with reference to the accompanying drawings.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one (piece) of a, b, and c may indicate a, b, c, a and b, a and c, b and c, or a, b, and c. Each of a, b, and c may be in a singular form or a plural form.

Third, in this application, "first", "second", and various numbers (for example, #1 and #2) indicate differentiation for ease of description, and are not used to limit the scope of embodiments of this application, for example, are used to distinguish between different data packets but not to describe a specific order or sequence. It should be understood that objects described in such a way are interchangeable in an appropriate circumstance, so that a solution other than embodiments of this application can be described.

Fourth, in this application, descriptions such as "when...", "in a case of...", and "if" all mean that corresponding processing is performed in a specific objective situation, and are not intended to limit time. The descriptions do not mean that a determining action is required during implementation, and do not mean any other limitation. In addition, it does not mean that a determining action after these condition conjunctions is the only condition for implementing the result, and other additional conditions may be included to implement the result.

Fifth, in this application, the terms "include", "have", and any variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

Sixth, in this application, "indicate" may include a direct indication and an indirect indication. When a piece of indication information indicates A, the indication information may directly indicate A or indirectly indicate A, but it does not mean that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a

direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, "protocols" in this application may be standard protocols in the communication field, for example, may include a 5G protocol, a new radio (new radio, NR) protocol, and a related protocol applied to a future communication system. This is not limited in this application. "Predefined" may include being defined in advance, for example, being protocol-defined. "Preconfigured" may be implemented by prestoring corresponding code or a corresponding table in a device, or may be implemented in another manner that may indicate related information. A specific implementation thereof is not limited in this application.

Eighth, in this application, "storage" may refer to storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Ninth, in this application, "sending information to... (an access network device)" may be understood as that a destination end of the information is the access network device, and may include directly or indirectly sending the information to the access network device. "Receiving information from... (an access network device)" may be understood as that a source end of the information is the access network device, and may include directly or indirectly receiving information from the access network device. Information may be necessarily processed between the source end for sending the information and the destination end, for example, a format change. However, the destination end may understand valid information from the source end. Similar expressions in this application may be understood similarly, and details are not described herein again.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system or a new radio (New Radio, NR) system, and a future evolved communication system like a future 6th generation mobile communication technology (6th generation mobile network, 6G).

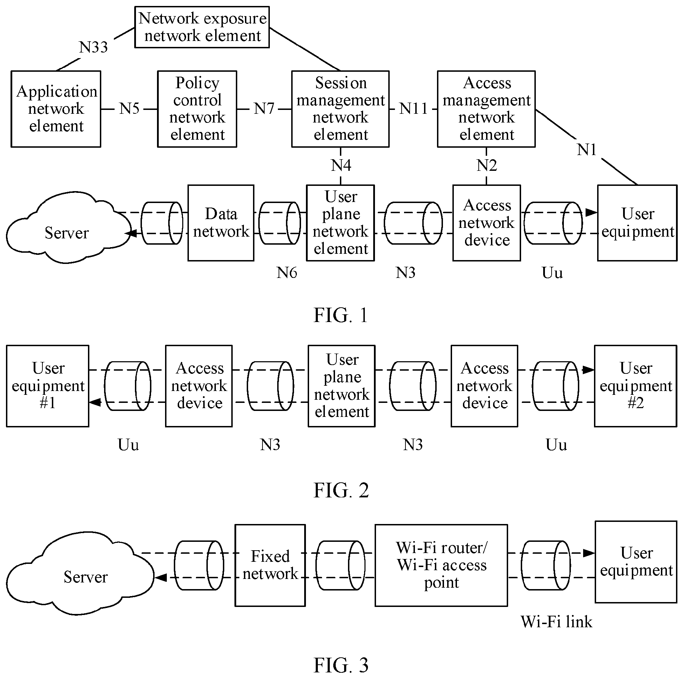

FIG. 1 is a diagram of an architecture of a communication system according to an embodiment of this application.

As shown in FIG. 1, the communication system may include a server, a data network (data network, DN), a core network, an access network device, and a user equipment (user equipment, UE). The following separately describes each part in the communication system. The communication system shown in FIG. 1 may also be referred to as a server-user equipment communication network.

1. User equipment: The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a pad (pad), a computer with a wireless transceiver function, a virtual reality (virtual reality, VR) terminal, an augmented reality (augmented reality, AR) terminal, an extended reality (extended reality, XR) terminal (for example, head mounted display XR glasses), a holographic projector, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, a wearable device, a terminal in a 5G network, a terminal in a future evolved network, or the like.

   The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. Generalized

wearable intelligent devices include full-function and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

2. Access network device: The access network device may also be referred to as an access device, that is, a (radio) access network (radio access network, (R)AN). The (R)AN can manage radio resources and provide an access service for a user equipment, to complete forwarding of user equipment data between the user equipment and the core network. The (R)AN may also be understood as a base station in a network.

The (R)AN may be a cellular system related to the 3rd generation partnership project (3rd generation partnership project, 3GPP), for example, a 4G or 5G mobile communication system, or a future-oriented evolved system (for example, a 6G mobile communication system). The (R)AN may alternatively be an open access network (open RAN, O-RAN or ORAN), a cloud radio access network (cloud radio access network, CRAN), or a wireless fidelity (wireless fidelity, Wi-Fi) system. The (R)AN may alternatively be a communication system that integrates two or more of the foregoing systems. The (R)AN may also be referred to as an (R)AN node, or have another expression, for example, an access network device. In this application, unless otherwise specified, the access network device is used for expression.

For example, the access network device in embodiments of this application may be any communication device with a wireless transceiver function and for communication with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, and a transmission point (transmission point, TP) or a transmission and reception point (transmission and reception point, TRP); may be a next generation NodeB (next generation NodeB, gNB) or a transmission point (TRP or TP) in a 5G system like an NR system, or one or one group of antenna panels (including a plurality of antenna panels) of a base station in the 5G system; may be a network node forming a gNB or a transmission point, such as a baseband unit (BBU) or a distributed unit (distributed unit, DU); or may be a next-generation base station in the 6th generation mobile communication system, or a base station in a future mobile communication system. Optionally, the access network device may alternatively be a wearable device, a vehicle, a vehicle-mounted device, or the like. For example, an access network device in a vehicle-to-everything (vehicle-to-everything, V2X) technology may be a road side unit (road side unit, RSU). It may be understood that all or some of functions of the access network device in this application may alternatively be implemented by using a software function running on hardware, or may be implemented by using a virtualization function instantiated on a platform (for example, a cloud platform). The method performed by the access network device in this application may alternatively be implemented by a logical node, a logical module, or software that can implement all or some functions of the access network device.

In some deployments, a plurality of access network devices cooperate to assist the user equipment in implementing radio access, and different access network devices separately implement some functions of the base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit BBU. The radio unit RU may be included in a radio frequency device or a radio frequency unit, for example, included in a remote radio unit (remote radio unit, RRU), an active antenna unit (active antenna unit, AAU), or a remote radio head (remote radio head, RRH). The CU implements some functions of the access network device, and the DU implements some functions of the access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (RAN), or the CU may be classified as an access network device in a core network (core network, CN). This is not limited in this application.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-

CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

3. Data network DN: provides, for example, an operator service, an Internet access service, or a third-party service, and includes a server. The server implements video source encoding, rendering, and the like.

4. Core network: is a device in a core network (core network, CN) that provides service support for a terminal. The core network is used to complete three major functions of registration, connection, and session management. Currently, examples of some core network devices are an application network element, a network exposure network element, a policy control network element, a session management network element, an access management network element, a user plane network element, and the like. The following describes these network elements in the core network in detail.

Application network element: In the 5G communication system, the application network element may be an application function (application function, AF) network element, represents an application function of a third party or an operator, is an interface for obtaining external application data in a 5G network, and is mainly configured to transfer a requirement of an application side on the network side.

Network exposure network element: In a long term evolution (long term evolution, LTE) communication system, the network exposure network element may be a service capability exposure function (service capability exposure function, SCEF) network element. In the 5G communication system, the network exposure network element may be a network exposure function (network exposure function, NEF) network element, is mainly configured to expose a service and a capability of a 3GPP network function to an AF, and may further enable the AF to provide information for the 3GPP network function.

A session management network element: is mainly configured to: manage a session, allocate and manage an internet protocol (internet protocol, IP) address of a user equipment, select an endpoint that can manage a user plane function interface and a policy control and charging function interface, perform downlink data notification, and the like. In the LTE communication system, the session management network element may be a serving gateway control plane (serving gateway control plane, SGW-C), a packet data network gateway control plane (packet data network gateway control plane, PGW-C), or a network element in which an SGW-C and a PGW-C are co-deployed. In the 5G communication system, the session management network element may be a session management function (session management function, SMF) network element, and completes terminal IP address allocation, UPF selection, charging and QoS policy control, and the like.

Access management network element: is mainly for mobility management, access management, and the like, and may be for implementing functions in a mobility management entity (mobility management entity, MME) function other than session management, for example, lawful interception and access authorization/authentication. In an LTE communication system, the access management network element may be an MME network element. In the 5G mobile communication system, the access management network element may be an access and mobility management function (access and mobility management function, AMF) network element, and mainly performs functions such as mobility management and access authentication/authorization. In addition, the access management network element is further responsible for transferring a user policy between a terminal and a policy control function (policy control function, PCF) network element.

Policy control network element: includes a user subscription data management function, a policy control function, a charging policy control function, quality of service (quality of service, QoS) control, and the like, is a unified policy framework used to guide network behavior, and provides policy rule information and the like for a control plane function network element (for example, an AMF or an SMF network element). In the LTE communication system, the policy control network element may be a policy control and charging function (policy control and charging function, PCRF). In the 5G communication system, the policy control network element may be a PCF network element. In the 5G communication system, the application network element may be a network slice selection function (network slice selection function, NSSF) network element.

User plane network element: serves as an interface to the data network, completes functions such as user plane data forwarding, session/flow-level-based charging statistics collection, and bandwidth throttling, to be specific, packet routing and forwarding, quality of service (quality of service, QoS) handling for user plane data, and the like. In the LTE communication system, the user plane network element may be a serving gateway user plane (serving gateway user plane, SGW-U), a packet data network gateway user plane (packet data network gateway user plane, PGW-U), or a network element in which an SGW-U and a PGW-U are co-deployed. In the 5G communication system, the user plane network element may be a user plane function (user plane function, UPF) network element.

In a future communication system like a 6G communication system, the foregoing network element or device may still use a name of the network element or device in a 4G or 5G communication system, or may have another name. This is not limited in embodiments of this application. The functions of the network elements or devices may be completed by one independent network element, or may be jointly completed by several network elements. During actual deployment,

network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of this application.

It may be understood that FIG. 1 is merely an example, and does not constitute any limitation on the protection scope of this application. A network element that is not shown in FIG. 1 A may be further used in a data transmission method provided in embodiments of this application. Certainly, the data transmission method provided in embodiments of this application may alternatively include only some network elements shown in FIG. 1.

As shown in FIG. 1, in the core network, the application network element is connected to the network exposure network element through an N33 interface, the application network element is connected to the policy control network element through an N5 interface, the policy control network element is connected to the session management network element through an N7 interface, the session management network element is connected to the access management network element through an N11 interface, the session management network element is connected to the user plane network element through an N4 interface, and the user plane network element is connected to the data network through an N6 interface. In the communication system shown in FIG. 1, the data network may include the server. The data network or the server is connected to the user plane network element through an N6 interface, the user plane network element is connected to the access network device through an N3 interface, and the access network device is connected to the user equipment through a Uu interface.

FIG. 2 is a diagram of an architecture of another communication system according to an embodiment of this application.

As shown in FIG. 2, the communication system includes a user equipment #1, an access network device #1, a user plane network element, an access network device #2, and a user equipment #2. The communication system may also be referred to as a terminal-terminal communication network. For example, in a tactile internet, the user equipment #1 is an interface between a tactile user and a manual system in a primary domain, and the user equipment #2 is a remote control robot or a remote operator in a controlled domain. The primary domain receives an audio/video feedback signal from the controlled domain. With help of various commands and feedback signals, the primary domain and the controlled domain are connected over a bidirectional communication link in a network domain. This forms a global control ring.

FIG. 3 is a diagram of an architecture of still another communication system according to an embodiment of this application.

As shown in FIG. 3, the communication system includes a server, a fixed network, a Wi-Fi router (or a Wi-Fi access point or a set-top box), and a user equipment. A cloud server transmits a large data volume of media data (for example, XR data) or common video data to the user equipment via the fixed network or the Wi-Fi router.

It should be understood that the diagram of the architecture of the communication system is merely an example for description, and a network architecture applicable to embodiments of this application is not limited thereto. Any network architecture that can implement functions of the foregoing network elements is applicable to embodiments of this application. The following mainly uses the communication system shown in FIG. 1 as an example for detailed description.

For ease of understanding of the solutions in embodiments of this application, the following describes in detail technical terms in embodiments of this application.

1. Protocol data unit (protocol data unit, PDU)
2. PDU set (PDU set)
A set including a plurality of data packets at a transport layer corresponds to a minimum granularity for data processing at an application layer. For example, for an XR service, a minimum granularity for data processing is a PDU set. In some application scenarios, the application layer can correctly parse a corresponding data unit only after correctly receiving all data packets in a PDU set. In some other application scenarios, the application layer can parse a corresponding data unit after correctly receiving a specific proportion of data packets in a PDU set.
3. Quality of service (QoS)
The quality of service is a technology used to resolve problems such as network delay and congestion. When a network is congested, data may be discarded. To meet different QoS requirements of a user for different applications, the network needs to allocate and schedule resources based on the requirements of the user and provide different QoS for different data. Currently, a QoS guarantee mechanism in 5G communication includes a guaranteed bit rate (guaranteed bit rate, GBR) QoS flow and a non-guaranteed bit rate (Non-GBR) QoS flow, and further supports inferential QoS.
4. QoS flow (QoS flow)

A 5G system forwards and processes data based on a granularity of the QoS flow, and guarantees QoS of data.

A 5G core network establishes one or more protocol data unit sessions (protocol data unit sessions, PDU sessions) for a UE. The QoS flow is a data flow that has same source and destination addresses and a same QoS

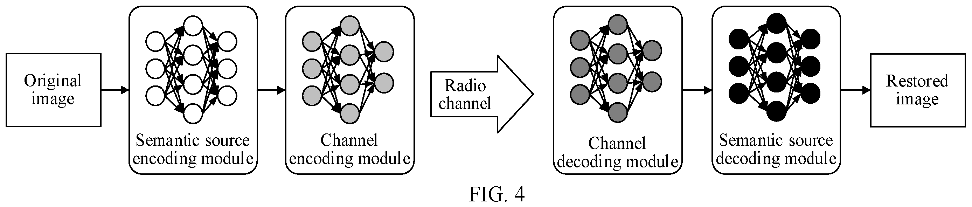

requirement in one PDU session. FIG. 4 is a diagram of a 5G system based on a QoS architecture according to an embodiment of this application. As shown in FIG. 4, a PDU session is established between a UE and a UPF, a radio bearer is established between the UE and an NB, and a core network tunnel is established between the NB and the UPF. The PDU session includes a plurality of QoS flows, and the plurality of QoS flows include a first QoS flow, a second QoS flow, and the like.

For a downlink, a 5GC identifies a characteristic of a data packet, including a source internet protocol (internet protocol, IP) address, a destination IP address, a source port number, a destination port number, and a transport layer protocol number of the data packet, maps data packets with a same characteristic to a same QoS flow, and adds a QoS flow identifier (QoS flow ID, QFI) to a header of the data packet to identify the QoS flow to which the data packet belongs. For an uplink, the 5GC may explicitly or implicitly configure a mapping relationship between a data packet characteristic and a QoS flow for the UE, and the UE maps to-be-transmitted uplink data to different QoS flows.

Data of different QoS flows is transmitted independently in the 5G system. For a QoS flow, the 5GC sends a QoS profile (QoS profile) of the QoS flow to a (R)AN, to indicate a QoS requirement of the QoS flow, for example, a packet delay budget (packet delay budget, PDB) or a packet error rate (packet error rate, PER), which indicates quality of service expected to be obtained when data of the QoS flow is transmitted in the 5G system. The PDB indicates a transmission delay upper limit of a data packet between a core network and the UE. A data packet that is not correctly transmitted within the PDB is considered to be timed out. The PER indicates an upper limit of a packet error rate in a QoS flow transmission process, that is, a proportion of data packets that are processed by a transmit end but are not correctly received by a receive end. "Between a core network and the UE" may be specifically understood as that, a downlink behavior may be understood as starting from a UPF in the core network to the UE; and an uplink behavior may be understood as starting from the UE to the UPF in the core network.

One PDU session may include a plurality of QoS flows, and QFIs of the QoS flows are different. In a PDU session, user plane service flows that have a same QFI use a same service forwarding processing manner (for example, scheduling). For a PDU session, the (R)AN establishes one or more data radio bearers (data radio bearers, DRBs) for the PDU session, and maps a QoS flow to these DRBs for air interface transmission. A plurality of QoS flows may be mapped to one DRB, but one QoS flow cannot be mapped to a plurality of DRBs. Usually, QoS flows having a same or similar QoS requirement are mapped to a same DRB, to provide a same QoS guarantee on an air interface.

In the 5G communication system, the QoS flow is controlled by an SMF network element in the core network, and the QoS flow may be preconfigured, or may be established and modified via a PDU session. A configuration of a QoS flow includes three parts: a QoS profile (QoS profile) on a (R)AN side, a QoS rule (QoS rule) on a UE side, and a packet detection rule (packet detection rule, PDR) on a UPF side.

QoS profile on the (R)AN side: Whether a QoS flow supports a guaranteed bit rate GBR or a non-guaranteed bit rate Non-GBR depends on a QoS profile of the QoS flow. The QoS profile includes the following QoS parameters.

(1) A QoS profile of a QoS flow includes QoS parameters: a 5G QoS identifier (5G quality identity, 5QI) and an allocation and retention priority (allocation and retention priority, ARP). The 5QI indicates that the QoS flow has a radio characteristic. The ARP indicates a priority of the QoS flow on an NG interface, and is applicable to QoS flows between different UEs or QoS flows in one UE. For example, the 5QI parameter may include a PDB, a PER, a maximum data burst volume (maximum data burst volume, MDBV), and the like, and the MDBV indicates a maximum volume of data that can be used to provide a service.
(2) A QoS profile of a non-GBR QoS flow may further include a QoS parameter: a reflective QoS attribute (reflective QoS attribute, RQA). The RQA indicates whether an uplink complies with mirror mapping.
(3) A QoS profile of a GBR QoS flow may further include QoS parameters: a guaranteed flow bit rate (guaranteed flow bit rate, GFBR) and a maximum flow bit rate (maximum flow bit rate, MFBR). The GFBR indicates a guaranteed data rate, where uplink and downlink data transmission rates are included. The MFBR indicates a maximum data rate, where uplink and downlink data transmission rates are included.
(4) A QoS profile of a GBR QoS flow may further include QoS parameters: notification control (notification control) and a maximum packet loss rate (maximum packet lose rate, MPLR). The notification control indicates whether a base station reports the notification control to the 5G core network when QoS cannot be met. The MPLR indicates a maximum packet loss rate that can be tolerated by one QoS flow.

The (R)AN may obtain the QoS profile in the following several manners: The core network may send the QoS profile to the (R)AN via the SMF and an AMF through an N2 interface. Alternatively, the QoS profile is preconfigured in the (R)AN.

QoS rule on the UE side: The QoS rule includes indication information indicating whether the QoS rule is a default QoS rule, a QoS rule identifier (QoS rule identifier, QRI), a QFI, and a precedence value (precedence value). Optionally, the QoS rule may further include a packet filter set. The QRI indicates domain identifier information, and is used for traffic detection and routing on the UPF side. The precedence value is used to determine an evaluation sequence of QoS rules.

The QoS rules are evaluated in ascending order of precedence values.

The UE may obtain the QoS rule in the following several manners: The core network may send the QoS rule to the UE via the SMF and the AMF through an N1 interface. Alternatively, the UE derives the QoS rule by using a reflective QoS mechanism.

PDR on the UPF side: The PDR includes different parameter information for different PDU sessions.

For an IPv4, IPv6, or IPv4v6 PDU session, the PDR may include the following parameter information: core network tunnel information (CN tunnel info), a network instance (network instance), a QFI, an IP packet filter set (IP packet filter set), and an application identifier (application identifier). The core network tunnel information indicates a core network address of an N3/N9 tunnel corresponding to the PDU session. The network instance indicates domain identifier information, and is used for traffic detection and routing on the UPF side. The QFI indicates identifier information of a QoS flow. The IP packet filter set includes a series of parameters related to IP packet filtering. The application identifier indicates an index of an application detection rule set configured in the UPF.

For a PDU session in an Ethernet, the PDR may include the following information: core network tunnel information, a network instance, a QFI, and an Ethernet packet filter set (Ethernet packet filter set). The Ethernet packet filter set includes a series of parameters related to Ethernet packet filtering.

Semantic communication is a technology that uses semantics to represent information and in which the semantics is transmitted. Meaning expression and transmission of information are resolved at a semantic level, and an understanding phase of an information meaning is partially or entirely placed to a transmit end. Different from conventional communication, the semantic communication requires that each bit be correctly transmitted and each pixel of a transmitted picture frame be not distorted, and semantic information is transmitted in semantic communication. For example, the transmit end does not need to transmit all pixels of an original image, but obtains semantic information by performing semantic encoding on the original image to be transmitted, and transmits the semantic information to the receive end. The receive end may restore a picture based on the semantic information. Through the semantic communication, the receive end can restore the picture without requiring that the pixels be completely correct and only requiring correctness at the semantic level, or the receive end can restore the picture at a good semantic level only requiring some bits. The semantic communication can reduce a transmission volume, so that a requirement on a transmission bandwidth is reduced.

The semantic communication can be widely applied to a future 6G communication system and metaverse era, for example, holographic communication, extended reality, and cloud gaming. Specifically, the semantic communication can implement session video oriented to face scenarios, and has been applied to a safe village network.

FIG. 4 is a diagram of a semantic communication transmission architecture according to an embodiment of this application. As shown in FIG. 4, a semantic library of a semantic communication system may usually include a semantic source encoding module, a semantic source decoding module, and data or a model that is helpful to an encoding and decoding module. First, a transmit end sequentially inputs original image data into the semantic source encoding module and a channel encoding module, to extract semantic information related to a task at a receive end. Then, the transmit end transmits the semantic information to the receive end. Finally, the receive end sequentially inputs the semantic information into a channel decoding module and the semantic source decoding module, to obtain a restored image. An encoding manner of the semantic source encoding module at the transmit end corresponds to a decoding manner of the semantic source decoding module at the receive end. The semantic source encoding module and the semantic source decoding module may be obtained through training by using an artificial intelligence algorithm. This is not limited in embodiments of this application.

If the current communication system is applied to the semantic communication to ensure feature flow-based data transmission based on a 5QI parameter, because requirements of the semantic communication for different tasks and different scenarios are different, low transmission efficiency may be caused.

For example, for a license plate recognition task, currently, if a 5QI parameter is used to ensure transmission of image data, there are more requirements on data packet transmission of a license plate image. Consequently, the receive end cannot restore the data, and the transmit end needs to resend a data packet. This causes low data transmission efficiency. For example, when a packet loss rate and a packet delay budget of the data packet of the license plate image exceed a preset threshold, the receive end cannot restore the data. However, these requirements are not for the license plate recognition task. Evidently, for the license plate recognition task, information transmission is performed through the semantic communication, and a main objective of the receive end is not to restore a high-definition license plate image, but to clearly recognize a license plate number in the image.

For another example, in different tasks, restoration requirements on image data may also be different. Some tasks need to restore only a part of region of interest in an image, and some tasks evidently need to restore an entire picture in the image. For a difference between restoration requirements on the image data picture in the two cases, evidently, such a unified data transmission requirement using the current 5QI parameter to ensure feature flow-based image data transmission cannot meet requirements for different tasks. Consequently, this also causes low data transmission efficiency.

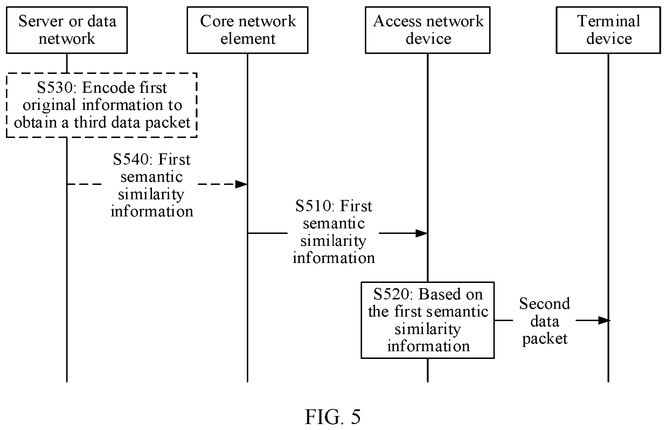

Therefore, for the foregoing problem, embodiments of this application provide a data transmission method and apparatus. The following provides detailed descriptions with reference to FIG. 5 to FIG. 14.

FIG. 5 is an interaction diagram of a data transmission method according to an embodiment of this application. It may be understood that, in this application, an example in which a server (or a data network), a core network element, an access network device, and a terminal device are used as execution bodies of the interaction example is used to illustrate a corresponding method. However, the execution bodies of the interaction example are not limited in this application. For example, the method implemented by the server (or the data network) may alternatively be implemented by a module (for example, a chip, a chip system, or a processor) in the server (or the data network), or may be implemented by a logical node, a logical module, or software that can implement all or some functions of the server (or the data network). The method implemented by the core network element may alternatively be implemented by a module (for example, a chip, a chip system, or a processor) in the core network element, or may be implemented by a logical node, a logical module, or software that can implement all or some functions of the core network element. The method implemented by the access network device may alternatively be implemented by a module (for example, a chip, a chip system, or a processor) in the access network device, or may be implemented by a logical node, a logical module, or software that can implement all or some functions of the access network device. The method implemented by the terminal device may alternatively be implemented by a module (for example, a chip, a chip system, or a processor) in the terminal device, or may be implemented by a logical node, a logical module, or software that can implement all or some functions of the terminal device.

S510: The core network element outputs first semantic similarity information to the access network device, and the access network device obtains the first semantic similarity information from the core network element, where the first semantic similarity information indicates a similarity between decoded information corresponding to different sub-data packets in a first data packet and first original information, and the first data packet includes a data packet obtained by encoding the first original information.

The first semantic similarity information may also be understood as a degree of contribution of different sub-data packets in the first data packet to a semantic similarity corresponding to a first task.

It should be understood that the first data packet may include at least one sub-data packet. The first data packet may be a PDU set, and the sub-data packet may be a PDU in the PDU set. There may be one or more first data packets. This is not limited in embodiments of this application.

Specifically, the core network element sends the first semantic similarity information to the access network device, and the access network device receives the first semantic similarity information from the core network element. Alternatively, the core network element outputs the first semantic similarity information to a fourth module via a third module of the access network device, and the fourth module of the access network device obtains, from the third module, the first semantic similarity information from the core network element.

In a possible implementation, the first semantic similarity information is carried in the first data packet. Alternatively, the first semantic similarity information may be carried in an independent message. This is not limited in embodiments of this application.

Optionally, when the first semantic similarity information is carried in a third data packet, the core network element extracts the first semantic similarity information from the third data packet to the first data packet.

Specifically, the first semantic similarity information is carried in a general packet radio service tunneling protocol-user plane (GTP-U), and the GTP-U is carried in the first data packet.

In other words, the access network device receives the first data packet from the core network element, where the first data packet includes a GTP-U, and the GTP-U includes the first semantic similarity information.

S520: Output a second data packet to the terminal device based on the first semantic similarity information, where data of the second data packet is a part of data of the first data packet.

Specifically, the access network device sends the second data packet to the terminal device based on the first semantic similarity information. Alternatively, a fifth module of the access network device outputs the second data packet to the terminal device via a sixth module based on the first semantic similarity information.

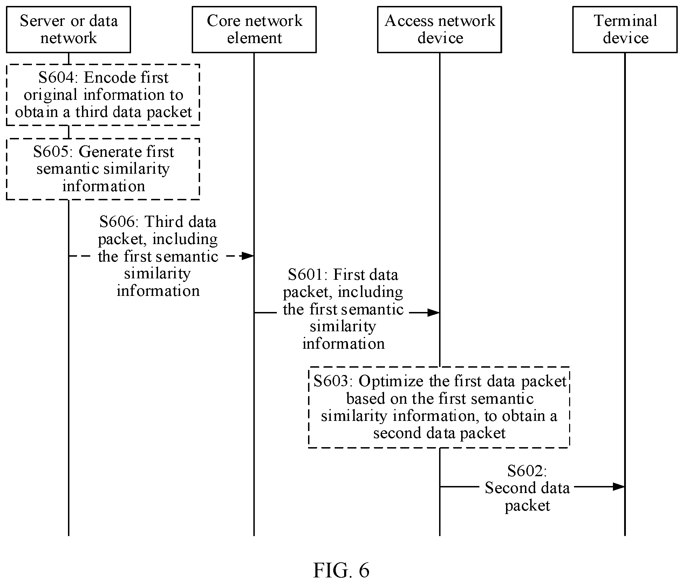

It should be understood that the following describes in detail a process in which the access network device determines the second data packet based on the first semantic similarity information in FIG. 6.

In the foregoing technical solution, the access network device may obtain the optimized second data packet based on the first semantic similarity information, so that data pressure on an air interface side can be reduced, thereby improving transmission efficiency and user experience in semantic communication. For example, for a license plate recognition task, an objective of transmitting data by the access network device to the terminal device is not to restore an image with very high definition. The access network device can reduce a volume of data transmitted on the air interface side via the first semantic similarity information, so that transmission efficiency in the semantic communication is improved.

Before step S510, the following steps may be performed.

S530: Optionally, the server or the data network encodes the first original information to obtain the third data packet.

It should be understood that the first original information is information corresponding to the first task. For example, the first original information may be original image information corresponding to a license plate recognition task.

It should be understood that the third data packet may include at least one sub-data packet. The third data packet may be a PDU set, and the sub-data packet may be a PDU in the PDU set. There may be one or more third data packets. This is not limited in embodiments of this application.

S540: Optionally, the server or the data network outputs the first semantic similarity information to the core network element, and the core network element obtains the first semantic similarity information from the server or the data network, where the first semantic similarity information indicates a similarity between decoded information corresponding to different sub-data packets in the third data packet and the first original information.

Specifically, the server or the data network sends the first semantic similarity information to the core network element, and the core network element receives the first semantic similarity information from the server or the data network.

Optionally, the server or the data network outputs the first semantic similarity information to a second module via a first module of the core network element, and the second module of the core network element obtains, from the first module, the first semantic similarity information from the server.

In a possible implementation, the first semantic similarity information is carried in the third data packet, or the first semantic similarity information may be carried in the independent message.

It should be understood that the core network element may include a user plane network element, for example, a UPF network element in a core network in a 5G system, or a network element for data transmission in a core network in a future communication system. This is not limited.

FIG. 6 is an interaction diagram of another data transmission method according to an embodiment of this application.

S601: A user plane network element sends a first data packet to an access network device, and the access network device receives the first data packet from the user plane network element. The first data packet includes first semantic similarity information.

Specifically, the first semantic similarity information may be carried in a general packet radio service tunneling protocol user (general packet radio system tunneling protocol user, GTP-U), and the first data packet includes the GTP-U. For example, the first semantic similarity information (semantic similarity info) may be carried in an extension header field of the GTP-U.

The first semantic similarity information indicates a similarity between decoded information corresponding to different sub-data packets in the first data packet and first original information, and the first data packet includes a data packet obtained by encoding the first original information.

In other words, the first semantic similarity information indicates importance of the sub-data packets in the first data packet.

In a possible implementation, the first semantic similarity information indicates a first semantic similarity and a first sub-data packet corresponding to the first semantic similarity, and the first data packet includes the first sub-data packet.

The first semantic similarity may be understood as a similarity between decoded information corresponding to the first sub-data packet and the first original information. A quantity of first sub-data packets is not limited in embodiments of this application.

It should be understood that there may be one or more first semantic similarities, and at least one first sub-data packet in the first data packet may correspond to different first semantic similarities.

Specifically, the first sub-data packet with the first semantic similarity is indicated by using a number of the first sub-data packet (for example, identifier information of the first sub-data packet). For example, when a type of the first sub-data packet is a PDU, the first semantic similarity information indicates the first semantic similarity and at least one PDU (for example, identifier information of the PDU) corresponding to the first semantic similarity.

For example, it is assumed that the first data packet obtained by encoding the first original information includes N first sub-data packets, where N is a positive integer, and one first sub-data packet has a corresponding first semantic similarity. As shown in Table 1, an example in which the type of the first sub-data packet is the PDU is used.

Table 1

| First sub-data packet | PDU #0 | PDU #1 | PDU #2 | ... | PDU #N |
|---|---|---|---|---|---|
| First semantic similarity | X1% | X2% | X3% | ... | Xn% |

As shown in Table 1, after transmission of the first sub-data packet PDU #0 is completed, data decoding (or data restoration) is performed on the PDU #0, to obtain a first semantic similarity of X1% between first decoded information #0

and the first original information. After transmission of the first sub-data packet PDU #1 is completed, data restoration is performed on the PDU #1, to obtain a first semantic similarity of X2% between first decoded information #1 and the first original information. By analogy, each first sub-data packet may have a corresponding first semantic similarity.

It should be understood that the foregoing example may be a one-dimensional representation form between the first semantic similarity and the first sub-data packet.

For another example, it is assumed that the first data packet obtained by encoding the first original information includes N first sub-data packets, where N is a positive integer, and two first sub-data packet have corresponding first semantic similarities. As shown in Table 2, an example in which the type of the first sub-data packet is the PDU is used.

Table 2

| First sub-data packet / First semantic similarity / First sub-data packet | PDU #0 | PDU #1 | PDU #2 |
|---|---|---|---|
| PDU #0 | - | X01% | X02% |
| PDU #1 | X10% | - | X12% |
| PDU #2 | X20% | X21% | - |

As shown in Table 2, after sequential transmission of the first sub-data packets PDU #0 and PDU #1 is completed, data decoding (or data restoration) is performed on the PDU #0 and the PDU #1, to obtain a first semantic similarity of X10% between first decoded information #2 and the first original information. X10 and X01 in Table 2 are the same. By analogy, every two first sub-data packets may have a corresponding first semantic similarity. It should be understood that the foregoing example may be a two-dimensional representation form between the first semantic similarity and the first sub-data packets. For another example, it is assumed that the first data packet obtained by performing semantic encoding the first original information includes N first sub-data packets, where three first sub-data packet have corresponding first semantic similarities.

As shown in Table 3, an example in which the type of the first sub-data packet is the PDU is used.

Table 3

| First sub-data packet / First semantic similarity / First sub-data packet | PDU #0 | PDU #1 | PDU #2 |
|---|---|---|---|
| PDU #0+PDU #1 | - | - | X012% |
| PDU #0+PDU #2 | - | X021% | |
| PDU #1+PDU #2 | X120% | - | - |

As shown in Table 3, after sequential transmission of the first sub-data packets PDU #0, PDU #1, and PDU #2 is completed, data decoding (or data restoration) is performed on the PDU #0, the PDU #1, and the PDU #2, to obtain a first semantic similarity of X120% between first decoded information #3 and the first original information. X120, X021, and X012 in Table 3 are the same. By analogy, every three first sub-data packets may have a corresponding first semantic similarity.

It should be understood that the foregoing example may be a three-dimensional representation form between the first semantic similarity and the first sub-data packets. There may be further a higher-dimension representation form between the first semantic similarity and the first sub-data packets. Details are not described herein.

It should be further understood that the first semantic similarity included in the first semantic similarity information

may include specific information in the foregoing any separate dimension, or the first semantic similarity may further include specific information in a combination of a plurality of dimensions. For example, the first semantic similarity information may include a first semantic similarity corresponding to one first sub-data packet and a first semantic similarity corresponding to two first sub-data packets.

In a possible implementation, the first semantic similarity information indicates a quantity of second sub-data packets and a second semantic similarity corresponding to the quantity of the second sub-data packets, and the first data packet includes the second sub-data packet.

Specifically, the second semantic similarity that is indicated by the first semantic similarity information and that corresponds to the quantity of the second sub-data packets may be represented by using an association relationship between the quantity of the second sub-data packets and the second semantic similarity.

The first semantic similarity information indicates the quantity of the second sub-data packets. Specifically, for example, identifier information of a PDU set is carried in frame headers of PDUs, and the identifier information of the PDU set indicates the PDU set to which the PDUs belong. PDUs belonging to a same PDU set have same identifier information of the PDU set, so that a quantity of PDUs can be obtained. Specifically, for another example, information about a quantity of PDUs included in a PDU set is carried in a frame header of the PDU set, to obtain the quantity of the PDUs.

It should be understood that the association relationship between the second semantic similarity and the quantity of the second sub-data packets may be a positive correlation function relationship.

For example, the quantity of the second sub-data packets and the second semantic similarity may obey uniform distribution.

For example, the first original information is a picture frame, and a first data packet obtained by performing semantic encoding on the first original information is segmented into 10 second sub-data packets, which may be 10 PDUs. After transmission of one PDU is successfully completed, the second semantic similarity is increased by 1/10. That is, one PDU contributes the same to the increase of the second semantic similarity.

For example, the quantity of the second sub-data packets and the second semantic similarity may obey logarithmic distribution. A slope corresponding to a function relationship between the first semantic similarity and the quantity of the second sub-data packets decreases.

For example, the first original information is a picture frame, and a first data packet obtained by performing semantic encoding on the first original information is segmented into 10 second sub-data packets, which may be 10 PDUs. A second semantic similarity between second decoded information obtained based on the first five PDUs and the first original information is high, and the later PDU contributes less to an increase of the second semantic similarity.

It should be understood that the association relationship between the second semantic similarity and the quantity of the second sub-data packets is merely an example for description. A specific form of the association relationship is not limited in embodiments of this application.

S602: The access network device sends a second data packet to the terminal device, and the terminal device receives the second data packet, where data of the second data packet is a part of the first data packet.

Before step S602, the following steps may be performed.

S603: Optionally, the access network device optimizes the first data packet based on the first semantic similarity information, to obtain the second data packet, where the data of the second data packet is a part of data of the first data packet.

In a possible implementation, the access network device uses, as the second data packet, a first sub-data packet corresponding to a highest first semantic similarity in the first semantic similarity information.

Specifically, the access network device uses, as the second data packet, M first sub-data packets corresponding to the first semantic similarity in the first semantic similarity information, where M is a positive integer.

For example, the first data packet includes three PDUs, and a similarity between decoded information corresponding to a PDU #0 and the first original information is higher than a similarity between decoded information corresponding to a PDU #1 and the first original information and a similarity between decoded information corresponding to a PDU #2 and the first original information. That is, when a channel condition is poor, the PDU #1 and the PDU #2 are discarded, and the PDU #0 is used as a second data packet.

For example, the first data packet includes three PDUs, and a similarity between decoded information corresponding to a PDU #0 and a PDU #1 and the first original information is higher than a similarity between decoded information corresponding to a PDU #0 and a PDU #2 and the first original information. The PDU #2 is discarded, the PDU #0 and the PDU #1 are used as a second data packet.

Optionally, the access network device obtains a semantic similarity threshold based on a task type of a first task, where the first data packet is a data packet corresponding to the first task.

In a possible implementation, when the first semantic similarity information indicates the first semantic similarity and the first sub-data packet corresponding to the first semantic similarity, the access network device determines, as the second data packet, a first sub-data packet corresponding to a case in which the first semantic similarity is greater than or equal to the semantic similarity threshold.

For example, an example in which the first semantic similarity is content shown in Table 2 is used for description. When a network is congested, if the first semantic similarity X10% is greater than the semantic similarity threshold, the access network device discards the first sub-data packet PDU #2 in the first data packet, to obtain the second data packet.

In a possible implementation, when the first semantic similarity information indicates the quantity of the second sub-data packets and the second semantic similarity corresponding to the second sub-data packet, the access network device may obtain the second semantic similarity based on the quantity of the second sub-data packets and the association relationship between the second sub-data packet and the second semantic similarity, and determine, as the second data packet, a second sub-data packet corresponding to a case in which the second semantic similarity is greater than or equal to the semantic similarity threshold.

Before step S601, the following steps may be included.

S604: Optionally, the server or the data network encodes the first original information to obtain a third data packet, where the third data packet includes the first semantic similarity information.

In other words, the first semantic similarity information may be carried in the third data packet.

Specifically, the server encapsulates the first semantic similarity information, for example, encapsulates the first semantic similarity information at a transport layer, for example, an extension header field of an IPv4 or IPv6 protocol, or a real-time transport protocol (real-time transport protocol, RTP) protocol layer, for example, an RTP extension header, or encapsulates the first semantic similarity information at a newly defined protocol layer between user datagram protocol (user datagram protocol, UDP) and RTP protocol layers, and then transfers the first semantic similarity information to a user plane network element of a core network with the third data packet through an N6 interface.

S605: Optionally, the server or the data network generates the first semantic similarity information.

Specifically, the server or the data network obtains first encoded information corresponding to the at least one first sub-data packet; and generates the first semantic similarity based on the first encoded information and the first original information. The first semantic similarity information indicates the first semantic similarity and the first sub-data packet corresponding to the first semantic similarity.

It should be understood that, because the first encoded information corresponds to first decoded information, the first semantic similarity obtained based on the first encoded information and the first original information may indicate a similarity between the first decoded information and the first original information.

Specifically, the server or the data network obtains second encoded information corresponding to the at least one second sub-data packet; and generates the second semantic similarity based on the second encoded information and the first original information. The first semantic similarity information indicates the quantity of the second sub-data packets and the second semantic similarity corresponding to the quantity of the second sub-data packets.

It should be understood that, because the second encoded information corresponds to second decoded information, the second semantic similarity obtained based on the second encoded information and the first original information may indicate a similarity between the second decoded information and the first original information.

S606: Optionally, the server or the data network sends the third data packet to the user plane network element, the user plane network element receives the third data packet from the server or the data network, and the user plane network element obtains the third data packet from the server or the data network.

The third data packet includes the first semantic similarity information. The third data packet includes the first sub-data packet or the second sub-data packet.

For example, the server or the data network may send the third data packet to the user plane network element in the core network through the N6 interface.

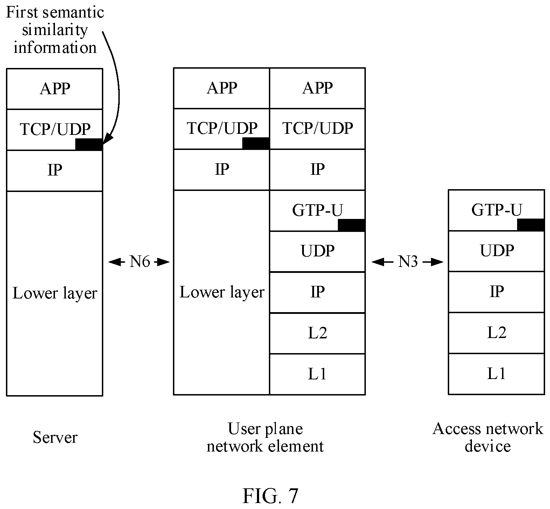

FIG. 7 is a diagram of a transmission procedure of a protocol stack according to an embodiment of this application.

The following describes the foregoing data transmission procedure in S606, S601, and S602 with reference to FIG. 1 and FIG. 7. First, first semantic similarity information is carried in a first data packet and transmitted to a user plane network element through an N6 interface. Specifically, as shown in FIG. 7, the first semantic similarity information is encapsulated at a UDP protocol layer of a transport layer and transmitted to the user plane network element with the first data packet through the N6 interface. Then, the first semantic similarity information is carried in the first data packet and transmitted to an access network device through an N3 interface. Specifically, as shown in FIG. 7, the first semantic similarity information is encapsulated in a GTP-U extension header field, and is transmitted with the first data packet through an N3 interface. Finally, the access network device transmits an optimized second data packet to a terminal device through a Uu interface.

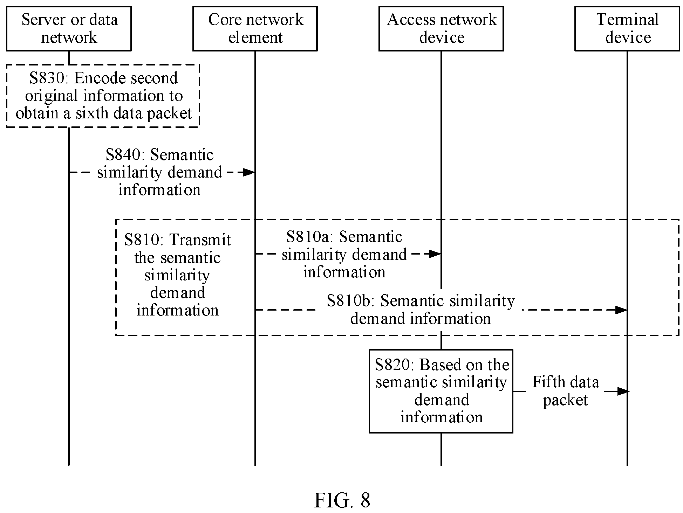

FIG. 8 is an interaction diagram of still another data transmission method according to an embodiment of this application.

S810: A core network element transmits semantic similarity demand information.

In a possible implementation, S810a: The core network element outputs the semantic similarity demand information to an access network device, and the access network device obtains the semantic similarity demand information from the core network element.

Specifically, the core network element sends the semantic similarity demand information to the access network device, and the access network device receives the semantic similarity demand information from the core network element. Alternatively, the core network element outputs the semantic similarity demand information to a fourth module via a third module of the access network device, and the fourth module of the access network device obtains, from the third module, the semantic similarity demand information from the core network element.

Specifically, the semantic similarity demand information may be carried in a QoS profile.

Optionally, the core network element outputs quality of service QoS reliability information to the access network device, and the access network device obtains the QoS reliability information from the core network element, where there is a mapping relationship between the QoS reliability information and semantic similarity demand information. The access network device obtains the semantic similarity demand information based on the mapping relationship and the QoS reliability information.

In a possible implementation, S810b: The core network element outputs the semantic similarity demand information to a terminal device, and the terminal device obtains the semantic similarity demand information from the core network element.

Specifically, the core network element sends the semantic similarity demand information to the terminal device, and the terminal device receives the semantic similarity demand information from the core network element. Alternatively, the core network element outputs the semantic similarity demand information to an eighth module via a seventh module of the terminal device, and the eighth module of the access network device obtains, from the seventh module, the semantic similarity demand information from the core network element.

Specifically, the semantic similarity demand information may be carried in a QoS rule.

In a data transmission process, S820: The access network device outputs a fifth data packet to the terminal device based on the semantic similarity demand information, where data of the fifth data packet is a part of data of a fourth data packet, the fourth data packet includes data obtained by encoding second original information, and the fourth data packet is from the core network element.

In a possible implementation, the access network device optimizes the fourth data packet based on the semantic similarity demand information, to obtain the fifth data packet, and the access network device outputs the fifth data packet to the terminal device.

Specifically, the access network device sends the fifth data packet to the terminal device based on the semantic similarity demand information. Alternatively, a fifth module of the access network device outputs the fifth data packet to the terminal device via a sixth module based on the semantic similarity demand information.

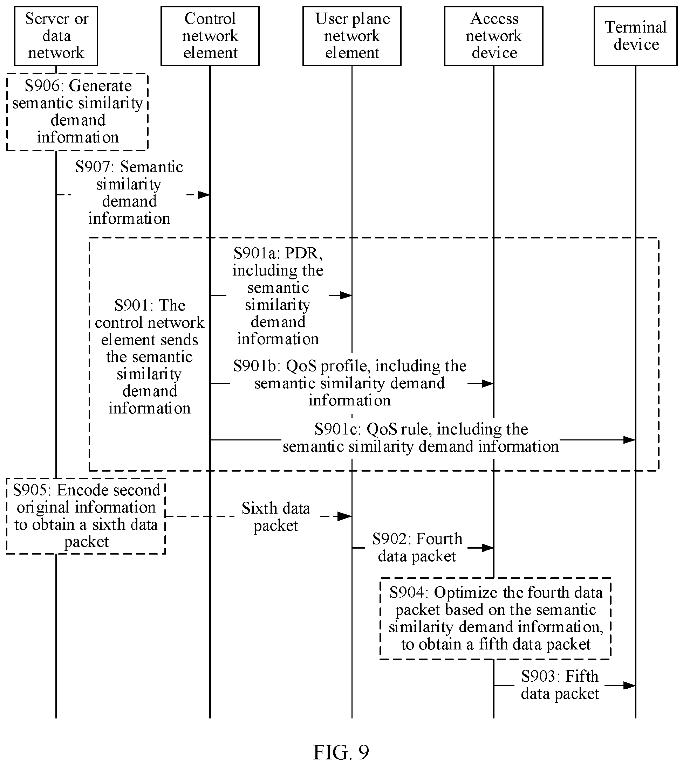

It should be understood that the following describes in detail a process in which the access network device determines the fifth data packet based on the semantic similarity demand information in FIG. 9.

In the foregoing technical solution, the access network device obtains the optimized fifth data packet via the semantic similarity demand information, so that data pressure on an air interface side can be reduced, thereby improving transmission efficiency and user experience in semantic communication. In addition, the semantic similarity demand information is related only to a task, which has a low update frequency and low signaling overheads. For example, a second task may be a license plate recognition task. In the task, a number in an image only needs to be clearly recognized, and whether all pixels of the image can be restored is not focused on. Therefore, a data volume corresponding to a lower limit condition that is indicated by the semantic similarity demand information and that is determined by a server based on the license plate recognition task is far less than that in common image transmission. For another example, when an implementation object of a second task is a machine, the machine focuses only on a part of interest in an image, and does not have an excessive requirement on a restoration degree of the entire image. Therefore, a data volume corresponding to a lower limit condition that is indicated by the semantic similarity demand information and that is determined by a server based on the implementation object being the machine is far less than that in common image transmission.

Before step S810, the following steps may be included.

S830: Optionally, the server or a data network encodes the second original information to obtain a sixth data packet.

It should be understood that for detailed explanations of S830, refer to S530. Details are not described herein.

S840: Optionally, the server or the data network outputs the semantic similarity demand information to the core network element, and the core network element obtains the semantic similarity demand information from the server or the data network, where the semantic similarity demand information indicates a lower limit condition that is related to a semantic similarity and that needs to be met in a data transmission process, the semantic similarity is a similarity between decoded information corresponding to different sub-data packets in the sixth data packet and the second original information, and the sixth data packet includes a data packet obtained by encoding the second original information.

Specifically, the server or the data network sends the semantic similarity demand information to the core network element, and the core network element receives the semantic similarity demand information from the server or the data network.

Optionally, the server or the data network outputs the semantic similarity demand information to a second module

via a first module of the core network element, and the second module of the core network element obtains, from the first module, the semantic similarity demand information from the server or the data network.

It should be understood that the core network element may include a control network element, for example, an SMF network element in a core network in a 5G system, or a network element for session management in a core network in a future communication system. This is not limited.

In a possible implementation, the lower limit condition related to the semantic similarity may indicate a semantic similarity lower limit, or may indicate a data volume lower limit in the data transmission process.

FIG. 9 is an interaction diagram of yet another data transmission method according to an embodiment of this application. A core network element in FIG. 9 may include a control network element and a user plane network element. It should be understood that "output" and "obtaining" of information between different devices in FIG. 9 are respectively described by using "sending" and "receiving" as examples.

S901: The control network element sends semantic similarity demand information, where the semantic similarity demand information is a new QoS characteristic used when a PDU session is established.

In a possible implementation, the semantic similarity demand information may indicate a semantic similarity lower limit.

In a possible implementation, the semantic similarity demand information may indicate a data volume lower limit in a data transmission process.

Specifically, the semantic similarity demand information may indicate a lower limit of a quantity of PDUs in a data transmission process, or may indicate a lower limit of a quantity of PDUs in a PDU set in a data transmission process.

In a possible implementation, S901a: The control network element sends the semantic similarity demand information to the user plane network element.

Specifically, a session management network element may send a PDR to the user plane network element through an N4 interface, where the PDR includes the semantic similarity demand information (semantic similarity demand information).

For example, for an IPv4, IPv6, or IPv4v6 PDU session, in addition to related parameter information mentioned in the foregoing QoS flow, parameter information included in the PDR may further include the semantic similarity demand information.

For another example, for a PDU session in an Ethernet, in addition to related parameter information mentioned in the foregoing QoS flow, parameter information included in the PDR may further include the semantic similarity demand information.

In a possible implementation, S901b: The control network element sends the semantic similarity demand information to an access network device.

Specifically, an access management network element may send QoS configuration information to the access network device through an N2 interface, where the QoS configuration information includes the semantic similarity demand information.

For example, the semantic similarity demand information is added to a 5QI table, and different 5QI values may correspond to different semantic similarity demand information. Table 4 is a mapping table between a 5QI and a QoS characteristic.

Table 4

| 5QI value | Resource type | Priority | PDB | PER | MDBV | Default averaging window | **Semantic similarity demand information** | Example service |
|---|---|---|---|---|---|---|---|---|
| 1 | GBR | 20 | 100 ms | $10^{-2}$ | N/A | 2000 ms | Y1% | Conventional audio |
| 2 | | 40 | 150 ms | $10^{-3}$ | N/A | 2000 ms | Y2% | Conventional video |
| 3 | | 30 | 50 ms | $10^{-3}$ | N/A | 2000 ms | Y3% | Real-time gaming |
| 4 | | 50 | 300 ms | $10^{-5}$ | N/A | 2000 ms | Y4% | Unconventional video |

For another example, a parameter is added to a QoS profile: (5) A QoS profile of a QoS flow may further include a QoS parameter: semantic similarity demand information.

In a possible implementation, S901c: The control network element sends the semantic similarity demand information to a terminal device.

Specifically, an access management network element may send a QoS rule to the terminal device through an N1 interface, where the QoS rule includes the semantic similarity demand information.

For example, in addition to the related parameter information mentioned in the foregoing QoS flow, parameter information included in the QoS rule may further include the semantic similarity demand information.

S902: The user plane network element sends a fourth data packet to the access network device, and the access network device receives the fourth data packet from the user plane network element.

The fourth data packet includes data obtained by encoding second original information.

S903: The access network device sends a fifth data packet to the terminal device, and the terminal device receives the fifth data packet from the access network device.

Before step S903, the following steps may be performed.

S904: Optionally, the access network device optimizes the fourth data packet based on the semantic similarity demand information, to obtain the fifth data packet, where data of the fifth data packet is a part of data of the fourth data packet.

In a possible implementation, when the semantic similarity demand information includes the data volume lower limit in the data transmission process, a third sub-data packet corresponding to a case in which a data volume in the fourth data packet reaches the data volume lower limit is determined as the fifth data packet.

For example, when the access network device detects network congestion, the access network device sends, to the terminal device, only a corresponding data packet that meets the lower limit condition of the semantic similarity. The fourth data packet includes three PDUs. If a data volume lower limit in a data transmission process is one PDU, the access network device may discard the remaining two PDUs, use the 1$^{st}$ PDU as a fifth data packet, and send the fifth data packet to the terminal device.

Before step S902, the following steps may be included.

S905: Optionally, a server or a data network encodes the second original information to obtain a sixth data packet, and sends the sixth data packet to the user plane network element.

It should be understood that although both the sixth data packet and the fourth data packet include the data packet obtained by encoding the second original information, the sixth data packet and the fourth data packet are not completely the same.

It should be understood that a process in which the server or the data network obtains the sixth data packet is similar to the process in which the server or the data network obtains the third data packet in S530. Details are not described herein.

In a data transmission phase of a second task, S905, S902, S904, and S903 may be performed.

Before step S901, the following steps may be included.

S906: Optionally, the server or the data network generates the semantic similarity demand information.

The semantic similarity demand information indicates the lower limit condition that is related to the semantic similarity and that needs to be met in the data transmission process. The semantic similarity is a similarity between decoded information corresponding to different sub-data packets in the sixth data packet and the second original information, and the sixth data packet includes a data packet obtained by encoding the second original information.

Specifically, the server or the data network determines the semantic similarity demand information based on a task type and/or a task implementation object of the second task.

It should be understood that the server or the data network needs to determine, only once during implementation of the second task, the semantic similarity demand information corresponding to the second task.

It should be understood that the semantic similarity demand information is task-oriented or object-oriented, and different tasks or different objects may have different semantic similarity demand information. That is, the semantic similarity demand information is related to the task type, or the semantic similarity demand information is related to the task implementation object.

S907: Optionally, the server or the data network sends the semantic similarity demand information to the control network element, and correspondingly, the control network element receives the semantic similarity demand information from the server or the data network.

The control network element may be a session management function network element or an access management function network element in a 5G communication system. In a future communication system, the control network element may be a network element for control plane management. This is not limited herein.

Specifically, as shown in FIG. 1, an application network element may send the semantic similarity demand information to a network exposure network element through an N33 interface, and the network exposure network element sends the semantic similarity demand information to the session management network element. Alternatively, an application network element may send the semantic similarity demand information to a policy control network element through an N5 interface, and the policy control network element sends the semantic similarity demand information to the

session management network element through an N7 interface. Optionally, the session management network element sends the semantic similarity demand information to the access management network element through an N11 interface.

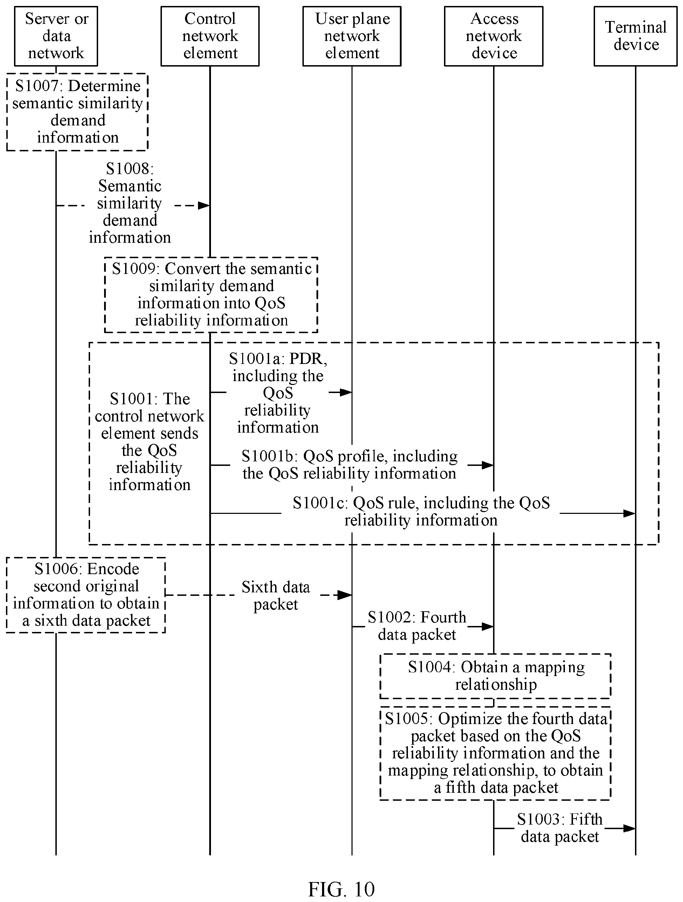

FIG. 10 is a schematic flowchart of yet another data transmission method according to an embodiment of this application.

S1001: A control network element sends QoS reliability information.

In a possible implementation, S1001a: The control network element sends a PDR to a user plane network element, where the PDR includes the QoS reliability information.

For example, the PDR includes a QFI, one piece of QoS corresponds to one 5QI, and the 5QI includes the corresponding QoS reliability information.

In a possible implementation, S1001b: The control network element sends a QoS profile to an access network device, where the QoS profile includes the QoS reliability information.

In a possible implementation, S1001c. The control network element sends a QoS rule to a terminal device, where the QoS rule includes the QoS reliability information.

It should be understood that specific implementations of S1001a, S1001b, and S1001c are respectively similar to those of S901a, S901b, and S901c. Details are not described herein.

S1002: The user plane network element sends a fourth data packet to the access network device, and the access network device receives the fourth data packet from the user plane network element.

It should be understood that for detailed descriptions of S1002, respectively refer to S902. Details are not described herein.

S1003: The access network device sends a fifth data packet to the terminal device, and the terminal device receives the fifth data packet from the access network device, where data of the fifth data packet is a part of data of the fourth data packet.

In the foregoing technical solution, the access network device may obtain the semantic similarity demand information via the existing QoS reliability information and a mapping relationship between the QoS reliability information and the semantic similarity demand information. The data packet is optimized by using the existing parameter, so that data pressure on an air interface side can be reduced, thereby improving transmission efficiency and user experience in semantic communication, and also reducing modifications to an existing QoS flow configuration, and improving compatibility of the existing QoS flow configuration.

Before step S1003, the following steps may be included.

S1004: Optionally, the access network device obtains the mapping relationship.

Specifically, the mapping relationship may be preset in the access network device. Alternatively, the mapping relationship is transmitted from an application network element to the access network device through a core network. Alternatively, the mapping relationship may be transmitted alongside by a core network element to the access network device based on a traffic detection (traffic detection) setting. Alternatively, the mapping relationship may be generated by a core network element by configuring different QoS based on a traffic detection (traffic detection) setting and different requirements, and transmitted to the access network device via the QoS profile.

S1005: Optionally, the access network device optimizes the fourth data packet based on the mapping relationship and the QoS reliability information, to obtain the fifth data packet.

Specifically, step 1: The access network device obtains the semantic similarity demand information based on the mapping relationship and the QoS reliability information. Step 2: Optimize the fourth data packet based on the semantic similarity demand information, to obtain the fifth data packet.

It should be understood that, for detailed descriptions of step 2, refer to S904. Details are not described herein.

Before step S1002, the following steps may be included.

S1006: Optionally, a server or a data network encodes second original information to obtain a sixth data packet, and sends the sixth data packet to the user plane network element.

It should be understood that a process in which the server or the data network obtains the sixth data packet is similar to the process in which the server or the data network obtains the third data packet in S530. Details are not described herein.

It should be understood that for detailed descriptions of S1006, respectively refer to S905. Details are not described herein.

In a data transmission phase of a second task, S1006, S1002, S1004, S1005, and S1003 may be performed.

Before step S1001, the following steps may be included.

S1007: Optionally, the server or the data network generates the semantic similarity demand information.

S1008: Optionally, the server or the data network sends the semantic similarity demand information to the control network element, and correspondingly, the control network element receives the semantic similarity demand information from the server or the data network.

It should be understood that for detailed descriptions of S1007 and S1008, respectively refer to S906 and S907. Details are not described herein.

S1009: Optionally, the control network element converts the semantic similarity demand information into the QoS reliability information.

Specifically, the session management function network element maps the semantic similarity demand information to the QoS reliability information via the mapping relationship.

The mapping relationship between the semantic similarity demand information and the QoS reliability information is related to the second task.

For example, the mapping relationship may be a function relationship between the semantic similarity demand information and the QoS reliability information, or may be a mapping table between the semantic similarity demand information and the QoS reliability information. A specific form of the mapping relationship is not limited in embodiments of this application.

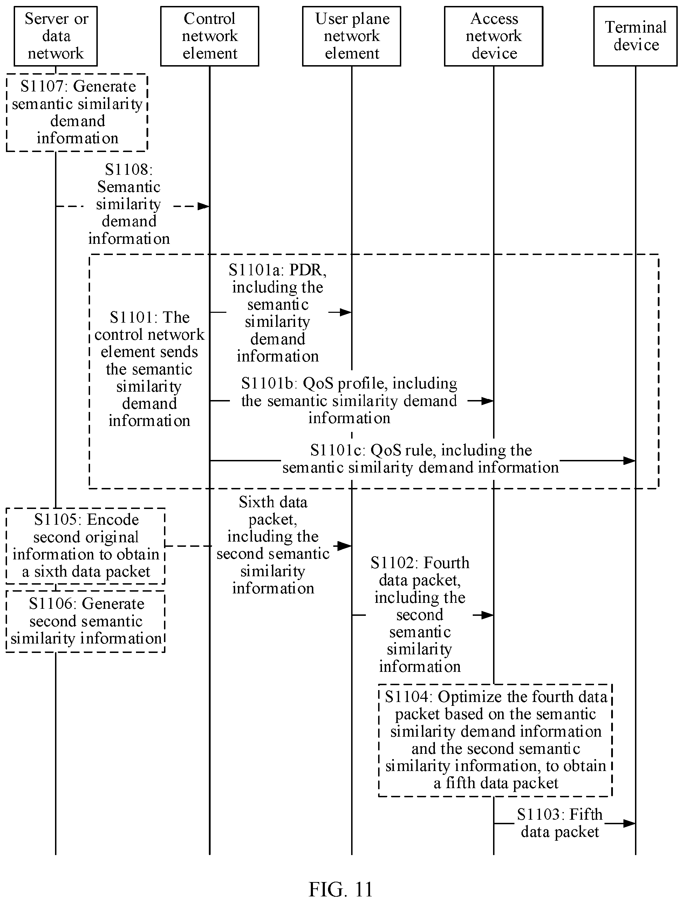

In the foregoing embodiment, the access network device may optimize the data packet via the semantic similarity information or the semantic similarity demand information, to reduce data transmission pressure on the air interface side. With reference to FIG. 11, the following describes in detail how to optimize the data packet via the semantic similarity information and the semantic similarity demand information. FIG. 11 is an interaction diagram of yet another data transmission method according to an embodiment of this application.

For a detailed process of S1101, refer to S901. Details are not described herein.

S1102: A user plane network element sends a fourth data packet to an access network device, and the access network device receives the fourth data packet from the user plane network element.

It should be understood that, for a detailed transmission manner in S1102, refer to the transmission manner of the first semantic similarity information in S601. Details are not described herein.

S1103: The access network device sends a fifth data packet to a terminal device, and the terminal device receives the fifth data packet from the access network device, where data of the fifth data packet is a part of data of the fourth data packet, and the fifth data packet includes data obtained by encoding second original information.

Before step S1103, the following steps may be included.

S1104: Optionally, the access network device optimizes the fourth data packet based on semantic similarity demand information and second semantic similarity information, to obtain the fifth data packet.

In a possible implementation, the semantic similarity demand information indicates a semantic similarity lower limit, the second semantic similarity information includes a third semantic similarity and a third sub-data packet corresponding to the third semantic similarity, and the fourth data packet includes the third sub-data packet. The third sub-data packet corresponding to a case in which the third semantic similarity is greater than or equal to the semantic similarity lower limit is determined as the fifth data packet.

For example, the access network device learns, through S1103b, that the semantic similarity demand information in a data transmission process is the semantic similarity lower limit, denoted as Z%. The access network device learns, through S1104 to S1106, of a plurality of third semantic similarities corresponding to a second task and the third sub-data packet corresponding to the third semantic similarity. If a third semantic similarity #1 is greater than the semantic similarity lower limit, a third sub-data packet corresponding to the third semantic similarity #1 is determined as the fifth data packet.

Before step S1002, the following steps may be included.

S1105: Optionally, a server or a data network encodes the second original information to obtain a sixth data packet, and the server or the data network sends the sixth data packet to the user plane network element, where the sixth data packet includes the second semantic similarity information.

Optionally, alternatively, the second semantic similarity information may not be sent with a third data packet, and is sent in an independent message. This is not limited.

It should be understood that for a detailed process, refer to S905. Details are not described herein.

S1106: Optionally, the server or the data network generates the second semantic similarity information, where the second semantic similarity information indicates a similarity between decoded information corresponding to different sub-data packets in the sixth data packet and the second original information.

It should be understood that, for related detailed explanations of the second semantic similarity information, refer to the first semantic similarity information in S510. Details are not described herein. A difference between the second semantic similarity information and the first semantic similarity information lies in that the second semantic similarity information is related to the sixth data packet corresponding to the second task, and the first semantic similarity information is related to a third data packet corresponding to a first task.

Before step S1101, S1107 and S1108 may be included. For a specific case, refer to S906 and S907. Details are not described herein.

The data transmission methods provided in embodiments of this application are described above in detail with reference to FIG. 5 to FIG. 11. It may be understood that, to implement the foregoing functions, the electronic device includes a corresponding hardware structure and/or a corresponding software module for performing each function.

A person skilled in the art may be aware that, in combination with units and algorithm steps of the examples described in embodiments disclosed in this specification, this application may be implemented by hardware or a

combination of hardware and computer software. Whether a function is performed by hardware or hardware driven by computer software depends on particular applications and design constraint conditions of the technical solutions. A person skilled in the art may use different methods to implement the described functions for the particular application, but it should not be considered that the implementation goes beyond the scope of this application.

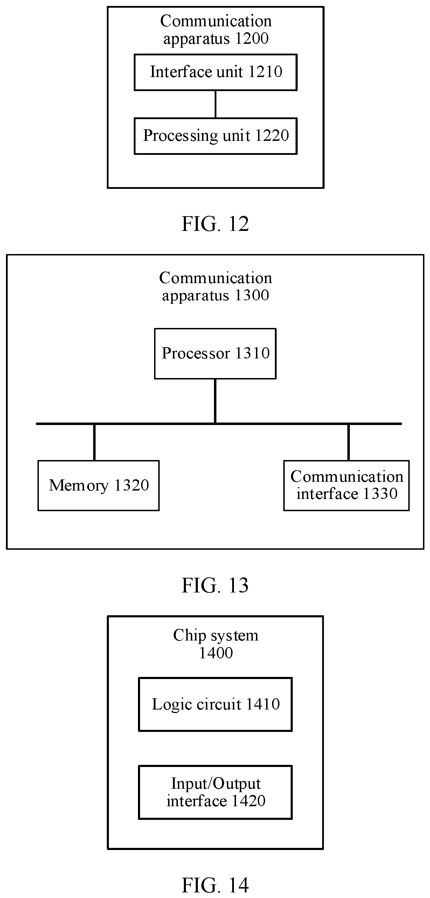

Communication apparatuses provided in embodiments of this application are described in detail below with reference to FIG. 12 to FIG. 14. It should be understood that descriptions of apparatus embodiments correspond to the descriptions of the method embodiments. Therefore, for content that is not described in detail, refer to the foregoing method embodiments. For brevity, details of a part of content are not described again.

FIG. 12 is a diagram of a communication apparatus 1200 according to an embodiment of this application. The apparatus 1200 may include a processing unit 1220, and the processing unit 1220 is configured to process data. The apparatus 1200 may further include an interface unit 1210. The interface unit 1210 may implement a corresponding communication function. The interface unit 1210 may also be referred to as a communication interface, a communication unit, or an interface unit. It should be understood that unless otherwise specified, or if operations such as sending and receiving in this application do not contradict an actual function or internal logic of the operations in related descriptions, the operations may be more usually understood as operations such as outputting and inputting, instead of operations of sending and receiving directly performed by a radio frequency circuit and an antenna.

Optionally, the apparatus 1200 may further include a storage unit. The storage unit may be configured to store instructions and/or data. The processing unit 1220 may read the instructions and/or data in the storage unit, so that the apparatus implements the foregoing method embodiments.

The apparatus 1200 may be configured to perform an action performed by the access network device in the foregoing method embodiments. In this case, the apparatus 1200 may be a communication device or a component that may be disposed in the communication device. The interface unit 1210 is configured to perform a receiving/sending-related operation on a communication device side in the foregoing method embodiments. The processing unit 1220 is configured to perform a processing-related operation of the access network device in the foregoing method embodiments.

In a design, the apparatus 1200 is configured to perform an action performed by the access network device in the method embodiment shown in FIG. 5 or FIG. 6. An execution body may be a chip, a chip system, or a processor that supports the access network device in implementing a corresponding method, or may be a logical module or software that can implement all or some functions of the access network device.

Specifically, the interface unit 1210 is configured to obtain first semantic similarity information from a core network element, where the first semantic similarity information indicates a similarity between decoded information corresponding to different sub-data packets in a first data packet and first original information, and the first data packet includes a data packet obtained by encoding the first original information.

The processing unit 1220 is configured to output a second data packet to a terminal device based on the first semantic similarity information.

For parts that are not described in detail, refer to the foregoing method embodiments.

In a design, the communication apparatus 1200 is configured to perform an action performed by the server or the data network in the method embodiment shown in FIG. 5 or FIG. 6. An execution body may be a chip, a chip system, or a processor that supports the server or the data network in implementing a corresponding method, or may be a logical module or software that can implement all or some functions of the server or the data network.

Specifically, the processing unit 1220 is configured to encode first original information to obtain a third data packet. The interface unit 1210 is configured to output first semantic similarity information to a core network element, where the first semantic similarity information indicates a similarity between decoded information corresponding to different sub-data packets in the third data packet and the first original information.

For parts that are not described in detail, refer to the foregoing method embodiments.

In a design, the communication apparatus 1200 is configured to perform an action performed by the core network element in the method embodiment shown in FIG. 5 or FIG. 6. An execution body may be a chip, a chip system, or a processor that supports the core network element in implementing a corresponding method, or may be a logical module or software that can implement all or some functions of the core network element.

Specifically, the interface unit 1210 is configured to obtain first semantic similarity information from a server or a data network, where the first semantic similarity information indicates a similarity between decoded information corresponding to different sub-data packets in a third data packet and first original information, and the third data packet includes a data packet obtained by encoding the first original information. The interface unit 1210 is configured to output the first semantic similarity information to an access network device.

For parts that are not described in detail, refer to the foregoing method embodiments.

In a design, the apparatus 1200 is configured to perform an action performed by the access network device in the method embodiments shown in FIG. 8 to FIG. 11. An execution body may be a chip, a chip system, or a processor that supports the access network device in implementing a corresponding method, or may be a logical module or software that can implement all or some functions of the access network device.

Specifically, the interface unit 1210 is configured to obtain semantic similarity demand information, where the semantic similarity demand information indicates a lower limit condition that is related to a semantic similarity and that needs to be met in a data transmission process, the semantic similarity is a similarity between decoded information corresponding to different sub-data packets in a fourth data packet and second original information, and the fourth data packet includes a data packet obtained by encoding the second original information.

The processing unit 1220 is configured to output a fifth data packet based on the semantic similarity demand information, where data of the fifth data packet is a part of data of the fourth data packet.

For parts that are not described in detail, refer to the foregoing method embodiments.

In a design, the communication apparatus 1200 is configured to perform an action performed by the server or the data network in the method embodiments shown in FIG. 8 to FIG. 11. An execution body may be a chip, a chip system, or a processor that supports the server or the data network in implementing a corresponding method, or may be a logical module or software that can implement all or some functions of the server or the data network.

Specifically, the processing unit 1220 is configured to encode second original information to obtain a sixth data packet. The interface unit 1210 is configured to output semantic similarity demand information, where the semantic similarity demand information indicates a lower limit condition that is related to a semantic similarity and that needs to be met in a data transmission process, and the semantic similarity is a similarity between decoded information corresponding to different sub-data packets in the sixth data packet and the second original information.

For parts that are not described in detail, refer to the foregoing method embodiments.

In a design, the communication apparatus 1200 is configured to perform an action performed by the core network element in the method embodiments shown in FIG. 8 to FIG. 11. An execution body may be a chip, a chip system, or a processor that supports the core network element in implementing a corresponding method, or may be a logical module or software that can implement all or some functions of the core network element.

Specifically, the interface unit 1210 is configured to obtain semantic similarity demand information from a server or a data network, where the semantic similarity demand information indicates a lower limit condition that is related to a semantic similarity and that needs to be met in a data transmission process, the semantic similarity is a similarity between decoded information corresponding to different sub-data packets in a sixth data packet and second original information, and the sixth data packet includes a data packet obtained by encoding the second original information. The interface unit 1210 is configured to output the semantic similarity demand information.

For parts that are not described in detail, refer to the foregoing method embodiments.

It should be understood that a specific process in which the units perform the foregoing corresponding steps is described in detail in the foregoing method embodiments. For brevity, details are not described herein again.

The processing unit 1220 in the foregoing embodiment may be implemented by at least one processor or a processor-related circuit. The interface unit 1210 may be implemented by a transceiver or transceiver-related circuit. The storage unit may be implemented by at least one memory.

FIG. 13 is a diagram of a structure of a communication apparatus 1300 according to an embodiment of this application.

As shown in FIG. 13, an embodiment of this application further provides a communication apparatus 1300. The apparatus 1300 includes a processor 1310. The processor 1310 is coupled to a memory 1320. The memory 1320 is configured to store a computer program or instructions and/or data. The processor 1310 is configured to execute the computer program or the instructions and/or the data stored in the memory 1320, so that the method in the foregoing method embodiments is performed.

Optionally, the apparatus 1300 includes one or more processors 1310.

Optionally, as shown in FIG. 13, the apparatus 1300 may further include the memory 1320.

Optionally, the apparatus 1300 may include one or more memories 1320.

Optionally, the memory 1320 and the processor 1310 may be integrated together or disposed separately.

Optionally, as shown in FIG. 13, the apparatus 1300 may further include a communication interface 1330. The communication interface 1330 is configured to: receive and/or send a signal. For example, the processor 1310 is configured to control the communication interface 1330 to receive and/or send the signal.

In a solution, the apparatus 1300 is configured to implement an operation performed by the server or the data network, the core network element, the access network device, or the terminal device in the foregoing method embodiments.

For example, the processor 1310 is configured to implement a processing-related operation performed by the server or the data network, the core network element, the access network device, or the terminal device in the foregoing method embodiments, and the communication interface 1330 is configured to implement a receiving/sending-related operation performed by the server or the data network, the core network element, the access network device, or the terminal device in the foregoing method embodiments.

FIG. 14 is a diagram of a chip system 1400 according to an embodiment of this application. The chip system 1400 (or may be referred to as a processing system) includes a logic circuit 1410 and an input/output interface (input/output

interface) 1420. The logic circuit is configured to: be coupled to the input interface, and transmit a data parameter through the input/output interface, to perform the method in the foregoing method embodiments. A device in which the chip system 1400 is installed may implement the methods and the functions in embodiments of this application. For example, the logic circuit 1410 may be a processing circuit in the chip system 1400, to control the device in which the chip system 1400 is installed, or may be coupled to and connected to a storage unit, and invoke instructions in the storage unit, so that the device can implement the methods and the functions in embodiments of this application. The input/output interface 1420 may be an input/output circuit in the chip system 1400, to output information processed by the chip system 1400, or input to-be-processed data or signaling information into the chip system 1400 for processing.

In a solution, the chip system 1400 is configured to implement an operation performed by the communication apparatus (for example, the server or the data network, the core network element, the access network device, or the terminal device) in the foregoing method embodiments.

For example, the logic circuit 1410 is configured to implement a processing-related operation performed by the server or the data network, the core network element, the access network device, or the terminal device in the foregoing method embodiments, and the input/output interface 1420 is configured to implement a receiving/sending-related operation performed by the server or the data network, the core network element, the access network device, or the terminal device in the foregoing method embodiments.

An embodiment of this application further provides a computer-readable storage medium. The computer-readable storage medium stores computer instructions used to implement the method performed by the communication apparatus (for example, the server or the data network, the core network element, the access network device, or the terminal device) in the foregoing method embodiments.

For example, when a computer program is executed by a computer, the computer is caused to implement the method performed by the communication apparatus (for example, the server or the data network, the core network element, the access network device, or the terminal device) in the foregoing method embodiments.

An embodiment of this application further provides a computer program product including instructions. When the instructions are executed by a computer, the computer is caused to implement the method performed by the communication apparatus (for example, the server or the data network, the core network element, the access network device, or the terminal device) in the foregoing method embodiments.

An embodiment of this application further provides a communication system. The system includes at least two of the foregoing server or data network, core network element, and access network device.

For explanations and beneficial effects of related content in any one of the apparatuses provided above, refer to the corresponding method embodiment provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described in this specification is intended to include, but is not limited to, these memories and any other appropriate type of memory.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be

considered that the implementation goes beyond the protection scope of this application.

In several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical, mechanical, or another form.

The units described as separate components may or may not be physically separate, and components displayed as units may or may not be physical units, in other words, may be located in one position, or may be distributed on a plurality of network units. Some or all of the units may be selected based on an actual requirement to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A data transmission method, wherein the method is applied to an access network device and comprises:

obtaining first semantic similarity information from a core network element, wherein the first semantic similarity information indicates a similarity between decoded information corresponding to different sub-data packets in a first data packet and first original information, and the first data packet comprises a data packet obtained by encoding the first original information; and

outputting a second data packet to a terminal device based on the first semantic similarity information, wherein data of the second data packet is a part of data of the first data packet.

**2.** The method according to claim 1, wherein the first semantic similarity information indicates a first semantic similarity and a first sub-data packet corresponding to the first semantic similarity, and the first data packet comprises the first sub-data packet.

**3.** The method according to claim 1, wherein the first semantic similarity information indicates a quantity of second sub-data packets and a second semantic similarity corresponding to the quantity of the second sub-data packets, and the first data packet comprises the second sub-data packet.

**4.** The method according to any one of claims 1 to 3, wherein the first semantic similarity information is carried in the first data packet.

5. The method according to claim 4, wherein the first semantic similarity information is carried in a general packet radio service tunneling protocol-user plane GTP-U, and the GTP-U is carried in the first data packet.

6. A data transmission method, wherein the method is applied to a server and comprises:

encoding first original information to obtain a third data packet; and
outputting first semantic similarity information to a core network element, wherein the first semantic similarity information indicates a similarity between decoded information corresponding to different sub-data packets in the third data packet and the first original information.

7. The method according to claim 6, wherein the first semantic similarity information comprises a first semantic similarity and a first sub-data packet corresponding to the first semantic similarity, and the third data packet comprises the first sub-data packet.

8. The method according to claim 6, wherein the semantic similarity information indicates a quantity of second sub-data packets and a second semantic similarity corresponding to the quantity of the second sub-data packets, and the third data packet comprises the second sub-data packet.

9. The method according to any one of claims 6 to 8, wherein the first semantic similarity information is carried in the third data packet.

10. The method according to claim 9, wherein the first semantic similarity information is carried in a real-time transport protocol RTP, and the RTP is carried in the third data packet.

11. A data transmission method, wherein the method is applied to a core network element and comprises:

obtaining first semantic similarity information from a server, wherein the first semantic similarity information indicates a similarity between decoded information corresponding to different sub-data packets in a third data packet and first original information, and the third data packet comprises a data packet obtained by encoding the first original information; and
outputting the first semantic similarity information to an access network device.

12. The method according to claim 11, wherein the first semantic similarity information indicates a first semantic similarity and a first sub-data packet corresponding to the first semantic similarity, and the third data packet comprises the first sub-data packet.

13. The method according to claim 11, wherein the first semantic similarity information indicates a quantity of second sub-data packets and a second semantic similarity corresponding to the quantity of the second sub-data packets, and the third data packet comprises the second sub-data packet.

14. The method according to any one of claims 11 to 13, wherein the first semantic similarity information from the server is carried in the third data packet, the first semantic similarity information output to the access network device is carried in a first data packet, and the first data packet comprises a data packet obtained by encoding the first original information.

15. The method according to claim 14, wherein the first semantic similarity information from the server is carried in an RTP, and the RTP is carried in the third data packet; and the first semantic similarity information output to the access network device is carried in a GTP-U, and the GTP-U is carried in the first data packet.

16. A data transmission method, wherein the method is applied to an access network device and comprises:

obtaining semantic similarity demand information, wherein the semantic similarity demand information indicates a lower limit condition that is related to a semantic similarity and that needs to be met in a data transmission process, the semantic similarity is a similarity between decoded information corresponding to different sub-data packets in a fourth data packet and second original information, and the fourth data packet comprises a data packet obtained by encoding the second original information; and
outputting a fifth data packet based on the semantic similarity demand information, wherein data of the fifth data packet is a part of data of the fourth data packet.

**17.** The method according to claim 16, wherein the method further comprises:

obtaining quality of service QoS reliability information, wherein there is a mapping relationship between the QoS reliability information and semantic similarity demand information; and
obtaining the semantic similarity demand information comprises:
obtaining the semantic similarity demand information based on the QoS reliability information and the mapping relationship.

**18.** The method according to claim 16 or 17, wherein the semantic similarity demand information indicates a data volume lower limit in the data transmission process, or the semantic similarity demand information indicates a semantic similarity lower limit.

**19.** The method according to any one of claims 16 to 18, wherein the semantic similarity demand information is carried in a quality of service QoS profile.

**20.** A data transmission method, wherein the method is applied to a server and comprises:

encoding second original information to obtain a sixth data packet; and
outputting semantic similarity demand information, wherein the semantic similarity demand information indicates a lower limit condition that is related to a semantic similarity and that needs to be met in a data transmission process, and the semantic similarity is a similarity between decoded information corresponding to different sub-data packets in the sixth data packet and the second original information.

**21.** The method according to claim 20, wherein

the semantic similarity demand information indicates a semantic similarity lower limit; or
the semantic similarity demand information indicates a data volume lower limit in the data transmission process.

**22.** A data transmission method, wherein the method is applied to a core network element and comprises:

obtaining semantic similarity demand information from a server, wherein the semantic similarity demand information indicates a lower limit condition that is related to a semantic similarity and that needs to be met in a data transmission process, the semantic similarity is a similarity between decoded information corresponding to different sub-data packets in a sixth data packet and second original information, and the sixth data packet comprises a data packet obtained by encoding the second original information; and
outputting the semantic similarity demand information.

**23.** The method according to claim 22, wherein

the semantic similarity demand information indicates a semantic similarity lower limit; or
the semantic similarity demand information indicates a data volume lower limit in the data transmission process.

**24.** The method according to claim 22 or 23, wherein outputting the semantic similarity demand information comprises: outputting the semantic similarity demand information to the core network element, wherein the semantic similarity demand information is carried in a packet detection rule.

**25.** The method according to claim 22 or 23, wherein outputting the semantic similarity demand information comprises: outputting the semantic similarity demand information to an access network device, wherein the semantic similarity demand information is carried in a QoS profile.

**26.** The method according to claim 22 or 23, wherein outputting the semantic similarity demand information comprises: sending the semantic similarity demand information to a terminal device, wherein the semantic similarity demand information is carried in a QoS rule.

**27.** A communication apparatus, comprising a unit configured to perform the method according to any one of claims 1 to 5, or comprising a unit configured to perform the method according to any one of claims 16 to 19.

**28.** A communication apparatus, comprising a unit configured to perform the method according to any one of claims 6 to

10, or comprising a unit configured to perform the method according to claim 20 or 21.

**29.** A communication apparatus, comprising a unit configured to perform the method according to any one of claims 11 to 15, or comprising a unit configured to perform the method according to any one of claims 22 to 26.

**30.** A computer-readable storage medium, wherein the computer-readable storage medium stores a computer program or instructions, and when the computer program or the instructions are run on a computer, the computer is caused to perform the method according to any one of claims 1 to 5, the computer is caused to perform the method according to any one of claims 6 to 10, the computer is caused to perform the method according to any one of claims 11 to 15, the computer is caused to perform the method according to any one of claims 16 to 19, the computer is caused to perform the method according to claim 20 or 21, or the computer is caused to perform the method according to any one of claims 22 to 26.

**31.** A communication system, comprising at least two communication apparatuses in the communication apparatus according to claims 27 to 29.

**32.** A computer program product, comprising instructions, wherein when the computer program product runs on a computer, the computer is caused to perform the method according to any one of claims 1 to 5, the computer is caused to perform the method according to any one of claims 6 to 10, the computer is caused to perform the method according to any one of claims 11 to 15, the computer is caused to perform the method according to any one of claims 16 to 19, the computer is caused to perform the method according to claim 20 or 21, or the computer is caused to perform the method according to any one of claims 22 to 26.

Network exposure network element
N33
Application network element
N5
Policy control network element
N7
Session management network element
N11
Access management network element
N1
N4
N2
Server
Data network
User plane network element
Access network device
User equipment
N6
N3
Uu

FIG. 1

User equipment #1
Access network device
User plane network element
Access network device
User equipment #2
Uu
N3
N3
Uu

FIG. 2

Server
Fixed network
Wi-Fi router/ Wi-Fi access point
User equipment
Wi-Fi link

FIG. 3

Original image
Semantic source encoding module
Channel encoding module
Radio channel
Channel decoding module
Semantic source decoding module
Restored image

FIG. 4

Server or data network
Core network element
Access network device
Terminal device
S530: Encode first original information to obtain a third data packet
S540: First semantic similarity information
S510: First semantic similarity information
S520: Based on the first semantic similarity information
Second data packet

FIG. 5

Server or data network
Core network element
Access network device
Terminal device
S604: Encode first original information to obtain a third data packet
S605: Generate first semantic similarity information
S606: Third data packet, including the first semantic similarity information
S601: First data packet, including the first semantic similarity information
S603: Optimize the first data packet based on the first semantic similarity information, to obtain a second data packet
S602: Second data packet


FIG. 6

First semantic similarity information
APP
TCP/UDP
IP
Lower layer
N6
APP
APP
TCP/UDP
TCP/UDP
IP
IP
GTP-U
UDP
IP
L2
L1
Lower layer
N3
GTP-U
UDP
IP
L2
L1
Server
User plane network element
Access network device

FIG. 7

Server or data network
Core network element
Access network device
Terminal device
S830: Encode second original information to obtain a sixth data packet
S840: Semantic similarity demand information
S810: Transmit the semantic similarity demand information
S810a: Semantic similarity demand information
S810b: Semantic similarity demand information
S820: Based on the semantic similarity demand information
Fifth data packet

FIG. 8

Server or data network
Control network element
User plane network element
Access network device
Terminal device
S906: Generate semantic similarity demand information
S907: Semantic similarity demand information
S901a: PDR, including the semantic similarity demand information
S901: The control network element sends the semantic similarity demand information
S901b: QoS profile, including the semantic similarity demand information
S901c: QoS rule, including the semantic similarity demand information
S905: Encode second original information to obtain a sixth data packet
Sixth data packet
S902: Fourth data packet
S904: Optimize the fourth data packet based on the semantic similarity demand information, to obtain a fifth data packet
S903: Fifth data packet

FIG. 9

Server or data network
Control network element
User plane network element
Access network device
Terminal device
S1007: Determine semantic similarity demand information
S1008: Semantic similarity demand information
S1009: Convert the semantic similarity demand information into QoS reliability information
S1001: The control network element sends the QoS reliability information
S1001a: PDR, including the QoS reliability information
S1001b: QoS profile, including the QoS reliability information
S1001c: QoS rule, including the QoS reliability information
S1006: Encode second original information to obtain a sixth data packet
Sixth data packet
S1002: Fourth data packet
S1004: Obtain a mapping relationship
S1005: Optimize the fourth data packet based on the QoS reliability information and the mapping relationship, to obtain a fifth data packet
S1003: Fifth data packet


FIG. 10

Server or data network
Control network element
User plane network element
Access network device
Terminal device
S1107: Generate semantic similarity demand information
S1108: Semantic similarity demand information
S1101: The control network element sends the semantic similarity demand information
S1101a: PDR, including the semantic similarity demand information
S1101b: QoS profile, including the semantic similarity demand information
S1101c: QoS rule, including the semantic similarity demand information
S1105: Encode second original information to obtain a sixth data packet
S1106: Generate second semantic similarity information
Sixth data packet, including the second semantic similarity information
S1102: Fourth data packet, including the second semantic similarity information
S1104: Optimize the fourth data packet based on the semantic similarity demand information and the second semantic similarity information, to obtain a fifth data packet
S1103: Fifth data packet


FIG. 11

Communication apparatus 1200
Interface unit 1210
Processing unit 1220

FIG. 12

Communication apparatus 1300
Processor 1310
Memory 1320
Communication interface 1330

FIG. 13

Chip system 1400
Logic circuit 1410
Input/Output interface 1420

FIG. 14

**INTERNATIONAL SEARCH REPORT**

International application No.
**PCT/CN2024/113316**

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC: H04L H04W G06F

Documentation searched other than minimum documentation to the extent that such documents are included in the fields searched

Electronic data base consulted during the international search (name of data base and, where practicable, search terms used)

WPABSC, CNTXT, VCN, VEN, ENTXT, CJFD, 3GPP: 语义, 相似, 传输效率, 解码, 编码, 数据包, 核心网, 接入, 服务器, 指示, 源, 始, QoS flow, semantic, similarity, transmission efficiency, encode, decode, packet data, CN, AN, server, indicate, original, initiate

**C. DOCUMENTS CONSIDERED TO BE RELEVANT**

| Category* | Citation of document, with indication, where appropriate, of the relevant passages | Relevant to claim No. |
|---|---|---|
| A | CN 115146125 A (UNIVERSITY OF SCIENCE AND TECHNOLOGY BEIJING) 04 October 2022 (2022-10-04)<br>entire document | 1-32 |
| A | CN 115292726 A (BEIJING UNIVERSITY OF POSTS AND TELECOMMUNICATIONS) 04 November 2022 (2022-11-04)<br>entire document | 1-32 |
| A | CN 116151209 A (BEIJING ZHONGGUANCUN KEJIN TECHNOLOGY CO., LTD.) 23 May 2023 (2023-05-23)<br>entire document | 1-32 |
| A | WO 2021242938 A1 (NETFLIX, INC.) 02 December 2021 (2021-12-02)<br>entire document | 1-32 |
| A | WO 2023068398 A1 (LG ELECTRONICS INC.) 27 April 2023 (2023-04-27)<br>entire document | 1-32 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 November 2024** | **14 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/113316**

| Patent document cited in search report | Publication date (day/month/year) | Patent family member(s) | Publication date (day/month/year) |
|---|---|---|---|
| CN 115146125 A | 04 October 2022 | None | |
| CN 115292726 A | 04 November 2022 | None | |
| CN 116151209 A | 23 May 2023 | None | |
| WO 2021242938 A1 | 02 December 2021 | US 2021374162 A1 | 02 December 2021 |
| WO 2023068398 A1 | 27 April 2023 | KR 20240090132 A | 21 June 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311458433